# EUROPEAN PATENT SPECIFICATION

(11) **EP 3 444 596 B1**
(45) Date of publication and mention of the grant of the patent: **04.03.2020**
(21) Application number: 17799452.2
(22) Date of filing: 17.05.2017
(51) Int. Cl.: G01N 27/04, G01N 15/06, G01N 15/10

(54) **SENSOR BOARD AND SENSOR DEVICE**
SENSORPLATINE UND SENSORVORRICHTUNG
CARTE DE CAPTEUR ET DISPOSITIF DE CAPTEUR

(30) Priority: 20.05.2016 JP 2016101971; 25.11.2016 JP 2016229589; 25.11.2016 JP 2016229590
(43) Date of publication of application: 20.02.2019
(73) Proprietor: Kyocera Corporation, Kyoto-shi, Kyoto 612-8501 (JP)
(72) Inventor: OTOMARU, Hidekazu, Kyoto-shi Kyoto 612-8501 (JP); KIMURA, Takashi, Kyoto-shi Kyoto 612-8501 (JP)
(74) Representative: Viering, Jentschura & Partner mbB Patent- und Rechtsanwälte
(86) International application number: PCT/JP2017/018597
(87) International publication number: WO 2017/200028

(56) References cited:
- JP-A- H02 102 444
- JP-A- H02 181 641
- JP-A- H02 181 641
- JP-A- H07 248 303
- JP-A- H08 278 269
- JP-A- 2002 195 114
- JP-A- 2004 144 609
- JP-A- 2012 013 639
- US-A1- 2009 217 737
- US-A1- 2010 147 052
- US-A1- 2012 047 993
- US-A1- 2015 084 100

## Description

### Technical Field

The present invention relates to a sensor board comprising an insulating substrate and an electrode disposed on the insulating substrate, and to a sensor device.

### Background Art

In connection with the installation of a DPF (Diesel Particulate Filter), etc. to collect PM (Particulate Matter) composed predominantly of soot contained in exhaust gas from automobiles, a PM detection sensor which detects a failure of the DPF, etc has been used. For example, Japanese Unexamined Patent Publication JP-A 2012-47596 discloses, as such a PM detection sensor, a particulate matter detector comprising an insulating substrate formed of a ceramic sintered body such as an aluminum oxide sintered body, a sensing electrode formed on the surface of the insulating substrate by a thick-film printing technique (screen printing method), etc. This device detects particulate matter on the basis of variation in electrical characteristics resulting from accumulation of detection targets, such as PM contained in exhaust gas, between a pair of sensing electrodes.

Meanwhile, for example, Japanese Unexamined Patent Publication JP-A 2014-32063 discloses a method of manufacturing a PM detection sensor having a pair of electrodes, comprising forming a pair of sensing electrodes, etc. by other technique than the thick-film printing technique (more specifically, forming a layered structure by stacking sensing electrodes, etc. one after another in a width direction, and slicing the layered structure in a predetermined thickness by means of dicing saw or otherwise). At present, a sensor board capable of an improvement in the degree of sensitivity for detection of particulate matter contained in exhaust gas and a sensor device utilizing the sensor board are in increasing demand.

US 2009/217737 A1 discloses a ceramic sensor element, which is used to determine particles, such as soot particles, in a gas mixture surrounding the sensor element, wherein the sensor element has a multitude of electrically insulating ceramic layers, and wherein on one large surface of the sensor element, for example, two measuring electrodes are fixed in place, which may be implemented in the form of interdigital electrodes that are interleaved with one another and form an electrochemical measuring element.

JP H02181641 A discloses an electrode plate for water droplet detection.

US 2010/147052 A1 discloses a soot sensor and a method for detecting soot.

JP 2012/013639 A discloses a particulate matter detection sensor device and a particulate matter detection sensor for detecting electroconductive particles contained in a to-be-measured gas.

US 2012/047993 A1 discloses a particulate matter detection device.

### Summary of Invention

The present invention provides a sensor board according to claim 1.

Furthermore, the present invention provides a sensor device according to claim 2.

### Brief Description of Drawings

Other objects, features, advantages of the invention will be apparent from the following detailed description and drawings.
FIG. 1A is a top view showing a sensor board in accordance with a first example, FIG. 1B is a view showing an example of wiring configuration in the second layer of the sensor board according to the first example, FIG. 1C is a view showing an example of wiring configuration in the third layer of the sensor board according to the first example, FIG. 1D is a view showing an example of heat-generating electrode configuration in the fourth layer of the sensor board according to the first example, and FIG. 1E is a bottom view showing an example of the sensor board according to the first example;
FIG. 2 is a sectional view taken along the line A-A of FIG. 1A;
FIG. 3 is a block diagram showing the functional structure of the sensor device incorporating the sensor board according to the first example;
FIG. 4A is a schematic diagram for explaining leakage current variation under adhesion of minute soot to the sensor board, FIG. 4B is a schematic diagram for explaining leakage current variation under adhesion of medium-sized soot to the sensor board, and FIG. 4C is a schematic diagram for explaining leakage current variation under adhesion of large-sized soot to the sensor board;
FIG. 5 is a flowchart showing an algorithm for determination of the distribution and size of detection targets in the sensor device according to the first example;
FIG. 6A is a top view showing a sensor board in accordance with a second example, FIG. 6B is a view showing a wiring configuration in the second layer of the sensor board according to the second example, FIG. 6C is a view showing a heat-generating electrode configuration in the third layer of the sensor board according to the second example, and FIG. 6D is a bottom view showing an example of the sensor board according to the second example;
FIG. 7 is a sectional view taken along the line B-B of FIG. 6A;
FIG. 8A is a view showing a modified example obtained by combining circular sensing electrodes having different diameters, FIG. 8B is a view showing a modified example obtained by changing the circular profile of each sensing electrode shown in FIG. 8A to an octagonal profile, and FIG. 8C is a view showing a modified example obtained by changing the circular profile of the sensing electrode according to the first example to a square profile;

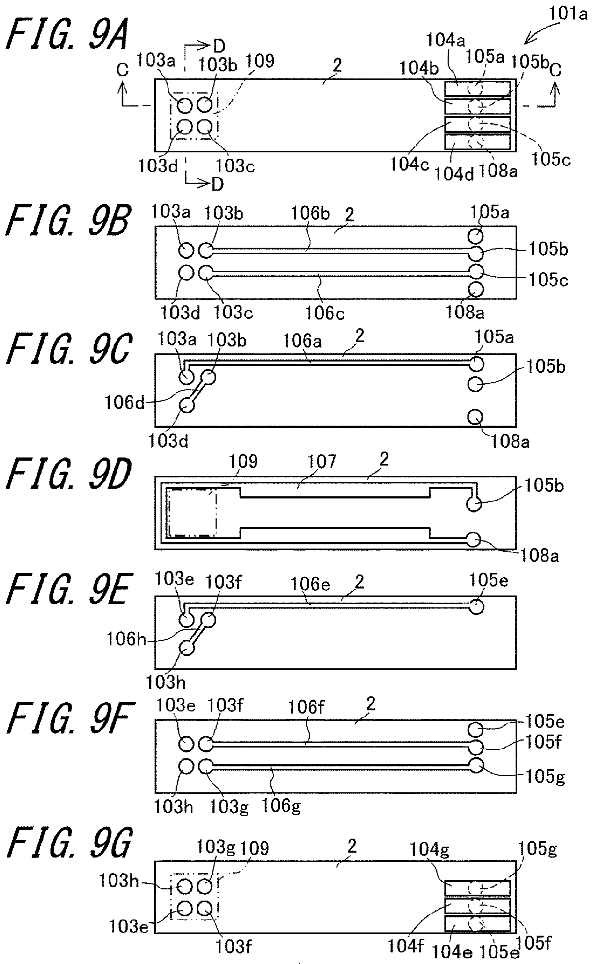

FIG. 9A is a top view showing a sensor board in accordance with a third example, FIG. 9B is a view showing an example of wiring configuration in the second layer of the sensor board according to the third example, FIG. 9C is a view showing an example of wiring configuration in the third layer of the sensor board according to the third example, FIG. 9D is a view showing an example of heat-generating electrode configuration in the fourth layer of the sensor board according to the third example, FIG. 9E is a view showing an example of wiring configuration in the fifth layer of the sensor board according to the third example, FIG. 9F is a view showing an example of wiring configuration in the sixth layer of the sensor board according to the third example, and FIG. 9G is a bottom view showing an example of the sensor board according to the third example;
FIG. 10A is a sectional view taken along the line C-C of FIG. 9A, and FIG. 10B is a sectional view taken along the line D-D of FIG. 9A;
FIG. 11 is a sectional view showing an example of a sensor device comprising the sensor board according to the third example;

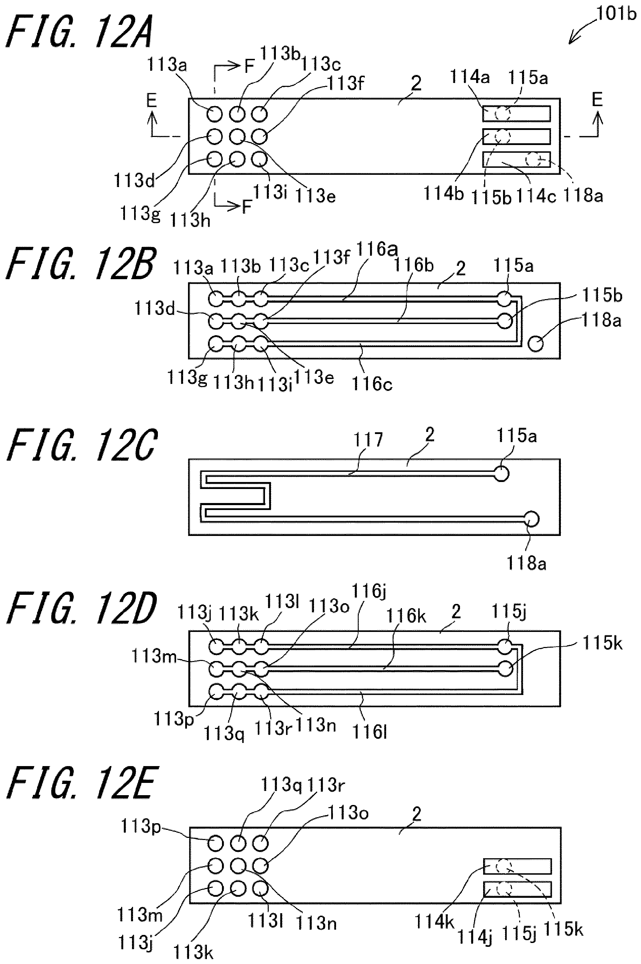

FIG. 12A is a top view showing a sensor board in accordance with a fourth example, FIG. 12B is a view showing an example of wiring configuration in the second layer of the sensor board according to the fourth example, FIG. 12C is a view showing an example of heat-generating electrode configuration in the third layer of the sensor board according to the fourth example, FIG. 12D is a view showing an example of wiring configuration in the fourth layer of the sensor board according to the fourth example, and FIG. 12E is a bottom view showing an example of the sensor board according to the fourth example;
FIG. 13A is a sectional view taken along the line E-E of FIG. 12A, and FIG. 13B is a sectional view taken along the line F-F of FIG. 12A;
FIG. 14A is a top view showing a sensor board in accordance with a fifth example, FIG. 14B is a view showing an example of heat-generating electrode configuration in the second layer of the sensor board according to the fifth example, FIG. 14C is a view showing an example of heat-generating electrode configuration in the third layer of the sensor board according to the fifth example, and FIG. 14D is a bottom view showing an example of the sensor board according to the fifth example;
FIG. 15A is a sectional view taken along the line G-G of FIG. 14A, and FIG. 15B is a sectional view taken along the line H-H of FIG. 14A;

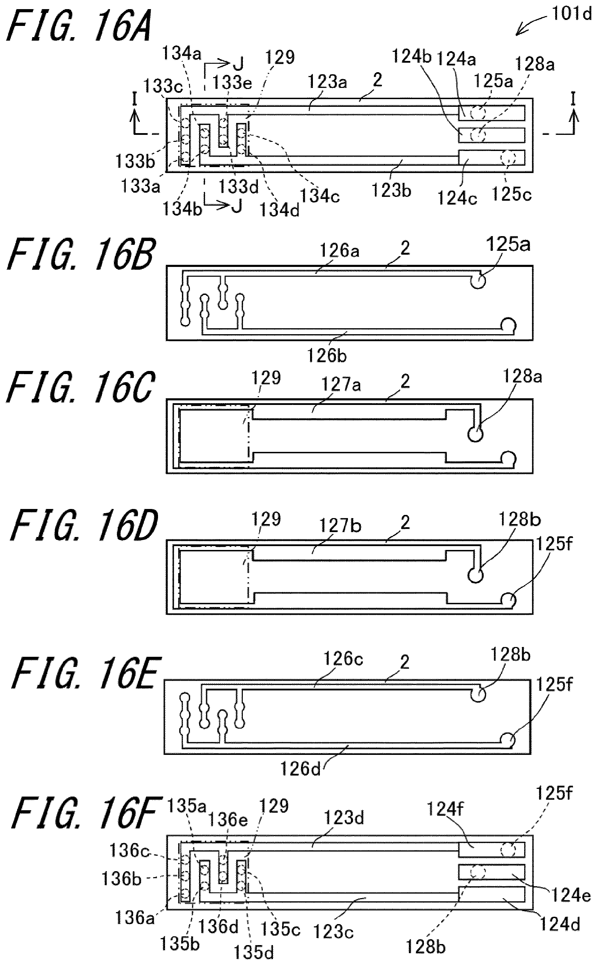

FIG. 16A is a top view showing a sensor board in accordance with a sixth example, FIG. 16B is a view showing an example of wiring configuration in the second layer of the sensor board according to the sixth example, FIG. 16C is a view showing an example of heat-generating electrode configuration in the third layer of the sensor board according to the sixth example, FIG. 16D is a view showing an example of heat-generating electrode configuration in the fourth layer of the sensor board according to the sixth example, FIG. 16E is a view showing an example of wiring configuration in the fifth layer of the sensor board according to the sixth example, and FIG. 16F is a bottom view showing an example of the sensor board according to the sixth example;
FIG. 17A is a sectional view taken along the line I-I of FIG. 16A, and FIG. 17B is a sectional view taken along the line J-J of FIG. 16A;

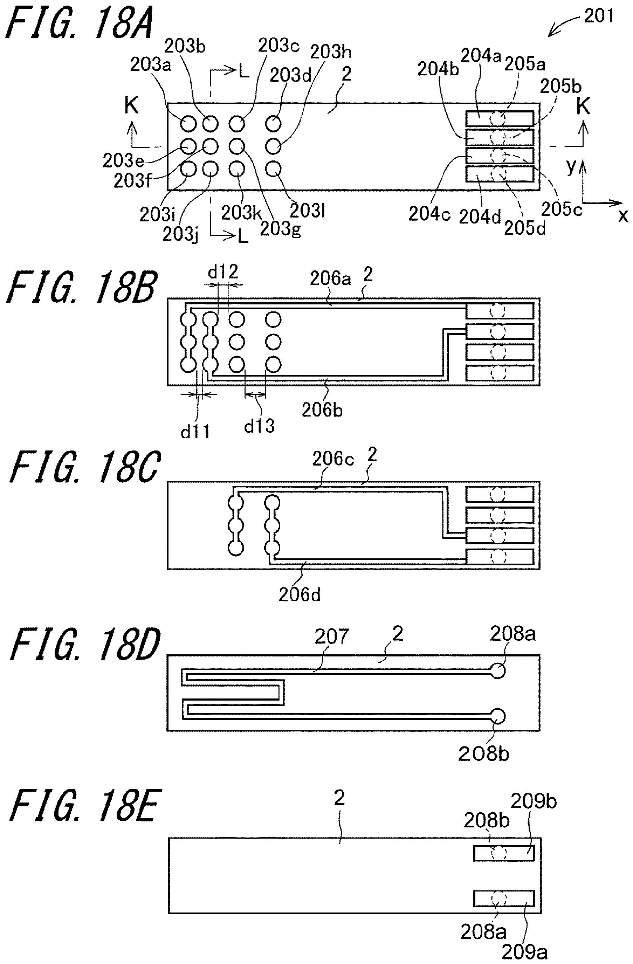

FIG. 18A is a top view showing a sensor board in accordance with a seventh example, FIG. 18B is a view showing an example of wiring configuration in the second layer of the sensor board according to the seventh example, FIG. 18C is a view showing an example of wiring configuration in the third layer of the sensor board according to the seventh example, FIG. 18D is a view showing an example of heat-generating electrode configuration in the fourth layer of the sensor board according to the seventh example, and FIG. 18E is a bottom view showing an example of the sensor board according to the seventh example;
FIG. 19A is a sectional view taken along the line K-K of FIG. 18A, and FIG. 19B is a sectional view taken along the line L-L of FIG. 18A;
FIG. 20 is a sectional view showing an example of a sensor device comprising the sensor board according to the seventh example;
FIG. 21A is a top view showing a sensor board implemented as a first variation according to an eighth example, FIG. 21B is a top view showing a sensor board implemented as a second variation according to the eighth example, and FIG. 21C is a top view showing a sensor board implemented as a third variation according to the eighth example;
FIG. 22A is a top view showing a sensor board implemented as a first variation according to a ninth example, FIG. 22B is a top view showing a sensor board implemented as a second variation according to the ninth example, FIG. 22C is a top view showing a sensor board according to the present invention, and FIG. 22D is a top view showing a sensor board implemented as a third variation according to the ninth example; and
FIG. 23A is a top view showing a sensor board in accordance with a tenth example, FIG. 23B is a sectional view taken along the line M-M of FIG. 23A, and FIG. 23C is a sectional view taken along the line

### Description of Comparative Examples

The following describes a sensor board and a sensor device according to the present disclosure with reference to accompanying drawings. In the following description, opposite sides of the construction will be defined specifically as, for example, upper and lower surface for the purpose of convenience in explanation, it being understood that such a definition is not intended to be limiting of the orientation of the sensor board, etc. in actual use.

### (First Example)

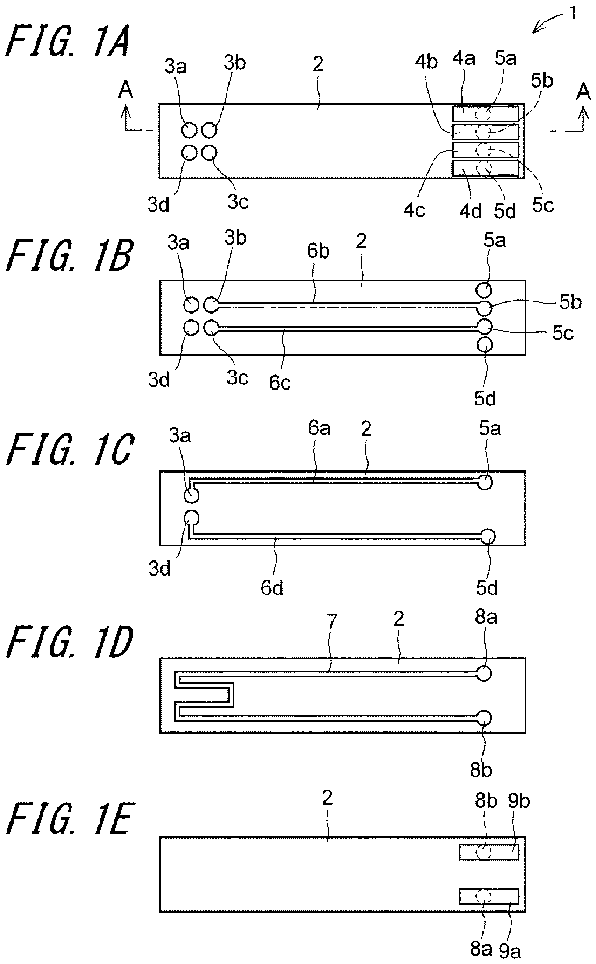

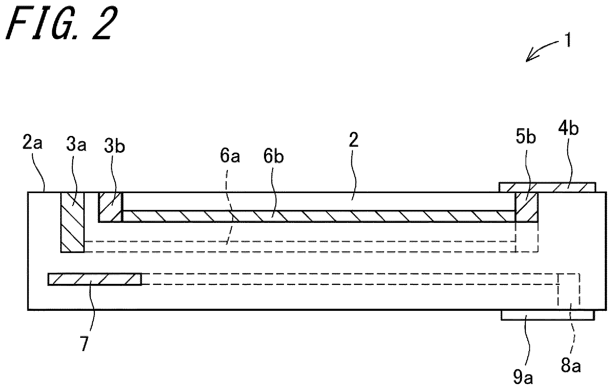

FIGS. 1A to 1E are drawings showing a structural example of a multilayer-structured sensor board according to a first example in the present disclosure. FIG. 1A is a top view of a sensor board 1; FIG. 1B is a view showing a wiring configuration in the second layer of the sensor board 1; FIG. 1C is a view showing a wiring configuration in the third layer of the sensor board 1; FIG. 1D is a view showing a heat-generating electrode configuration in the fourth layer of the sensor board 1; and FIG. 1E is a bottom view of the sensor board 1. In addition, FIG. 2 is a sectional view taken along the line A-A of FIG. 1A.

For example, the sensor board 1 is used in a sensor device which detects PM (Particulate Matter) such as soot contained in exhaust gas from a diesel engine vehicle or a gasoline engine vehicle (for example, the sensor board is disposed in an exhaust passage for automotive exhaust gas). The sensor board 1 comprises: an insulating substrate 2; at least a pair of positive and negative columnar sensing electrodes 3a and 3b which are exposed at one surface (first face) of the insulating substrate 2; and innerlayer wiring lines 6a and 6b that are embedded within the insulating substrate 2 and correspond to the sensing electrodes 3a and 3b.

The sensor board 1 achieves, as its feature, an improvement in the degree of sensitivity for detection of particulate matter, etc. by narrowing a gap between the sensing electrodes when adopted in a sensor device.

As shown in FIGS. 1A to 1E and FIG. 2, the first layer, the second layer, or the third layer of the sensor board 1, is provided with electrode terminals 4a to 4d, internal wiring lines 5a to 5d, and innerlayer wiring lines 6a to 6d corresponding to sensing electrodes 3a to 3d. Moreover, a heat-generating electrode 7 is embedded within the fourth layer of the sensor board 1, and, the fourth layer or the fifth layer is provided with internal wiring lines 8a and 8b and connection pads 9a and 9b corresponding to positive and negative electrodes of the heat-generating electrode 7.

In this example, the sensing electrodes 3a to 3d are each a cylindrical electrode having an upper surface thereof exposed at a first face 2a of the insulating substrate 2. The upper surface and the first face 2a are flush with each other. The sensing electrode 3a is connected, via the internal wiring line 5a connected to the innerlayer wiring line 6a of the third layer and the electrode terminal 4a of the first layer, to a positive electrode of an external DC power supply (not shown) set for 50 [V], for example. The sensing electrode 3b is connected, via the internal wiring line 5b connected to the innerlayer wiring line 6b of the second layer and the electrode terminal 4b of the first layer, to a negative electrode of the external DC power supply. Like the sensing electrode 3a, the sensing electrode 3c is connected, via the internal wiring line 5c, to the positive electrode of the DC power supply, and, like the sensing electrode 3b, the sensing electrode 3d is connected, via the internal wiring line 5d, to the negative electrode of the DC power supply. Thus, the sensing electrode 3a constitutes, in conjunction with the sensing electrode 3b or the sensing electrode 3d, a pair of positive and negative sensing electrodes, and, the sensing electrode 3c constitutes, in conjunction with the sensing electrode 3b or the sensing electrode 3d, a pair of positive and negative sensing electrodes.

The heat-generating electrode 7 is connected, via the connection pads 9a and 9b, to an external DC power supply (not shown) set for 20 [V], for example. The heat-generating electrode 7 is heated to, for example, 700 [°C] for decomposition and removal of PM (Particulate Matter) adherent to the first face 2a.

The insulating substrate 2 in the form of, for example, a rectangular flat plate, serves as a base body in which paired sensing electrodes, as well as a pair of sensing electrodes and the heat-generating electrode, are disposed so as to be electrically insulated from each other. For example, the insulating substrate 2 is formed of a ceramic sintered body such as sintered aluminum oxide, sintered aluminum nitride, sintered mullite, sintered glass ceramic, or zirconia ceramic (sintered zirconium oxide). A stack of a plurality of insulating layers formed of such a ceramic sintered body constitutes the insulating substrate 2.

For example, where the insulating substrate 2 is constructed of a stack of a plurality of insulating layers formed of sintered aluminum oxide, the insulating substrate 2 can be manufactured in the following manner.

That is, the insulating substrate 2 is produced by adding raw powdery materials such as silicon oxide (SiO₂), magnesium oxide (MgO), and manganese oxide (Mn₂O₃) serving as sintering aids to aluminum oxide (Al₂O₃) powder constituting inorganic particles, adding suitable binder, solvent, and plasticizer to the powder mixture, kneading the mixture into a slurry, shaping the slurry into a sheet by a heretofore known technique such as the doctor blade method or the calender roll method to obtain a ceramic green sheet, subjecting the ceramic green sheet to suitable punching operation, stacking a plurality of the ceramic green sheets together on an as needed basis, and firing the stack at a high temperature (about 1300°C to 1600°C).

The insulating substrate 2 may include a crystal phase containing alumina and manganese, and a glass phase containing manganese. The crystal phase may contain, in addition to alumina, various ceramics such as mullite, zirconia, aluminum nitride, and glass ceramic.

The glass phase is an amorphous phase which contains at least Mn₂O₃, and may further contain one or more oxides selected from among Si, Mg, Ca, Sr, B, Nb, Cr, and Co. The glass phase may alternatively be an amorphous phase containing Mn₂O₃, SiO₂, and MgO.

The manganese-containing glass phase exhibits good wettability to an alumina crystal phase. Thus, it may be believed that, in a heating process subsequent to a firing process, the glass phase permeates the surface layer of the insulating substrate 2 so as to cover the surfaces of crystal particles, and consequently most part of the glass phase remains in the surface layer.

With such a manganese-containing glass phase being present in exposed condition at the first face 2a of the insulating substrate 2, there is obtained a fracture-resistant insulating substrate 2 which suffers little defect which provides origins of cracking. The glass phase is lower in Young's modulus than the alumina-containing crystal phase, and thus, for example, under exposure to exhaust gas, thermal shock occurring in the insulating substrate 2 due to adhesion of water droplets can be lessened. This protects the insulating substrate 2 from fracture.

The sensing electrodes 3a to 3d are each made as a via (cylindrical) electrode. For example, each sensing electrode is 50 µm in diameter, and, the distance between adjacent sensing electrodes is set at 10 µm. Note that the diameter of each of the sensing electrodes 3a to 3d may be adjusted within the range of 20 µm to 100 µm, and the distance between adjacent sensing electrodes may be adjusted within the range of 5 µm to 50 µm.

Where the sensing electrodes 3a to 3d are each made as a via electrode, the insulating substrate 2 including such sensing electrodes 3a to 3d can be produced by using a method similar to a conventional via electrode-equipped circuit board manufacturing method.

As described above, the sensing electrodes 3a to 3d serve to detect particulate matter such as soot in an environment where the sensor board is installed in the sensor device. Upon adhesion of particulate matter such as soot to between a pair of electrodes (for example, between the sensing electrodes 3a and 3b, or between the sensing electrodes 3b and 3d), the electrical resistance between the pair of sensing electrodes varies, causing a change in leakage current flowing between the electrodes. The detection of the change in leakage current enables acquisition of information about particulate matter existing between the paired sensing electrodes.

Thus, the sensing electrodes 3a to 3d contain a metal material which allows detection of the change in leakage current. Oxidation-resistant platinum may be used as the metal material contained in the sensing electrodes 3a to 3d.

Moreover, the metal material used for the sensing electrodes 3a to 3d may be a metal material which is highly resistant to oxidation in a high-temperature environment, for example, platinum, or a metal material capable of forming an oxide-containing passive film at a surface thereof. Examples of the metal material capable of forming an oxide-containing passive film at the surface thereof include a Fe-Ni-Cr-Ti-Al alloy and MoSi₂ metal.

For example, a thickness of the passive film is set to about 0.1 to 5 µm. The passive film having this level of thickness covers the surface region of the sensing electrodes 3a to 3d, and consequently the likelihood of oxidation of the whole or the most part of the sensing electrodes can be diminished.

About 90% of the surface region of the sensing electrodes 3a to 3d in terms of area may be composed of a passive film. In other words, 90% or above of the area of the exposed surface region of the sensing electrodes 3a to 3d may be covered with a passive film. This reduces the likelihood that the whole of the sensing electrodes 3a to 3d will undergo oxidation.

Moreover, the surface region of the sensing electrodes 3a to 3d may be entirely composed of a passive film. In other words, the entire area of the exposed surface region of the sensing electrodes 3a to 3d may be covered with a passive film. This minimizes the likelihood that the whole of the sensing electrodes 3a to 3d will undergo oxidation.

Moreover, the exposed surfaces of the sensing electrodes 3a to 3d may be deposited with a metallic plating layer by electroplating or electroless plating. The metallic plating layer is formed of a metal which is highly resistant to corrosion and securely connectable with a connecting member, for example, nickel, copper, gold, or silver. For example, the exposed surface is deposited successively with an about 0.5 to 10 µm-thick nickel plating layer and an about 0.1 to 3 µm-thick gold plating layer, or, an about 1 to 10 µm-thick nickel plating layer and an about 0.1 to 1 µm-thick silver plating layer. This makes it possible to suppress corrosion of the sensing electrodes 3a to 3d. Note that a metallic plating layer formed of other metal than the aforementioned, for example, a palladium plating layer, may be interposed.

The surfaces of the sensing electrodes 3a to 3d and the electrode terminals 4a to 4d may be deposited with a metallic plating layer by electroplating or electroless plating. The metallic plating layer is formed of a metal which is highly resistant to corrosion and securely connectable with a connecting member, for example, nickel, copper, gold, or silver. For example, the surface is deposited successively with an about 0.5 to 10 µm-thick nickel plating layer and an about 0.1 to 3 µm-thick gold plating layer, or, an about 1 to 10 µm-thick nickel plating layer and an about 0.1 to 1 µm-thick silver plating layer. This makes it possible to suppress corrosion of the sensing electrodes 3a to 3d and the electrode terminals 4a to 4d, and to strengthen the connection between an external electric circuit and the electrode terminals 4a to 4d, or the connection between a metallic lead (not shown) and the electrode terminals 4a to 4d.

The internal wiring lines 8a and 8b are formed within the insulating substrate 2 so as to be electrically connected to the connection pads 9a and 9b, respectively, disposed on the lower surface of the insulating substrate 2. The innerlayer wiring lines 6a to 6d are embedded within the insulating substrate 2 so as to lie between the first face 2a provided with the sensing electrodes 3a to 3d and the other opposite face (lower surface in the case shown in FIG. 1). This enables the sensing electrodes 3a to 3d to have external electrical connection via the innerlayer wiring lines 6a to 6d disposed within the insulating substrate 2. To leave a space for wiring corresponding to the sensing electrodes 3a to 3d, the connection of the innerlayer wiring lines 6a to 6d to the electrode terminals 4a to 4d of the first layer is made via different layers. Moreover, for example, the innerlayer wiring lines 6a to 6d may include a circuit-patterned wiring conductor (not marked with reference symbol) which is provided between the layers constituting the insulating substrate 2.

The heat-generating electrode 7 is formed of, for example, a metal material similar to the metal material used for the sensing electrodes 3a to 3d, and in the interest of efficient heat generation in particular, examples thereof include a material containing iron, titanium, chromium, silicon, etc. having high electrical resistance. Moreover, the heat-generating electrode 7 may contain an oxidation-resistant metal, such as platinum or a Fe-Ni-Cr alloy, as a major constituent.

The metal material used for the heat-generating electrode 7 is contained in an amount of, for example, about 80% by mass or above in the heat-generating electrode 7 as a major constituent of the heat-generating electrode 7. In addition to this metal material, an inorganic component such as glass or ceramic may be added to the heat-generating electrode 7. Such an inorganic component serves for shrinkage control in a firing step of the heat-generating electrode 7-forming process, which is effected concurrently with a firing step of the insulating substrate 2-forming process,

In forming the sensing electrodes 3a to 3d, the electrode terminals 4a to 4d, the internal wiring lines 5a to 5d, the innerlayer wiring lines 6a to 6d, and the heat-generating electrode 7, for example, powder of the aforenamed metal materials with an organic solvent and a binder added is kneaded to prepare a metallic paste, and, the metallic paste is applied, in a predetermined pattern, to the surface of the ceramic green sheet for forming the insulating substrate 2, as well as embedded, in a predetermined pattern, in a through hole of the ceramic green sheet. The application or embedding of the metallic paste is effected by a printing technique such for example as the screen printing method. A plurality of the ceramic green sheets are stacked together so as to cover the printed patterns that define the sensing electrodes 3a to 3d, the electrode terminals 4a to 4d, the internal wiring lines 5a to 5d, the innerlayer wiring lines 6a to 6d, and the heat-generating electrode 7, with subsequent concurrent firing of the metallic pastes and the ceramic green sheets.

The following describes the operation of a sensor device 10 according to the present example using the sensor board 1 thus constructed.

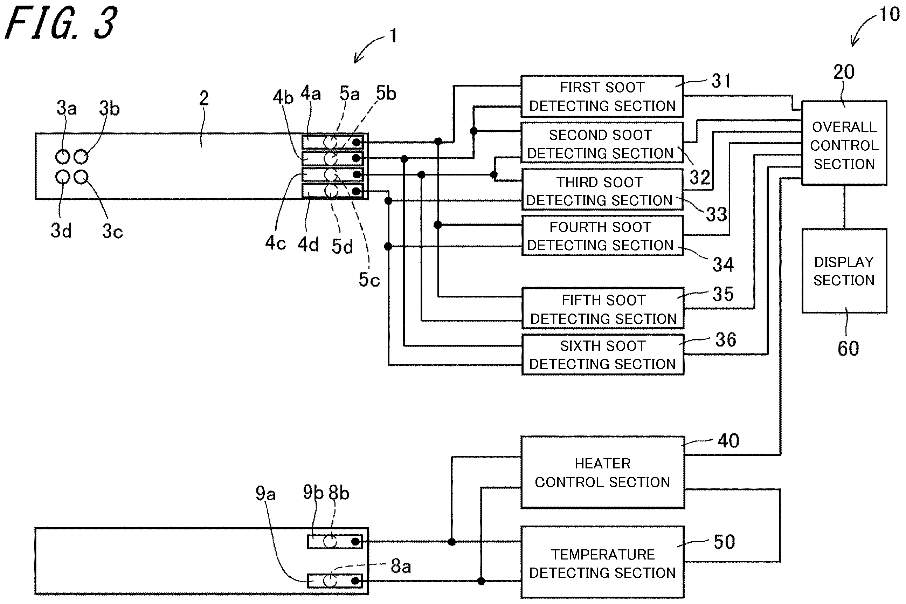

FIG. 3 is a block diagram showing the functional structure of the sensor device incorporating the sensor board according to the first example. As shown in FIG. 3, the sensor device 10 according to this example comprises the sensor board 1, an overall control section 20, and first to sixth soot detecting sections 31 to 36. In addition, a heater control section 40, a temperature detecting section 50, and a display section 60 may be provided in the sensor device 10.

The overall control section 20 is, for example, a microcomputer which exercises overall control of the sensor device 10. More specifically, the overall control section 20 controls the first to sixth soot detecting sections 31 to 36 and the heater control section 40 on the basis of specified programs. Moreover, the overall control section 20 determines the condition of particulate matter distribution and the size of particulate matter on the basis of current values measured by the first to sixth soot detecting sections 31 to 36.

On a command from the overall control section 20, the first soot detecting section 31 applies a predetermined voltage (for example, 50 [V]) supplied from an external DC power supply (not shown) to between the sensing electrodes 3a and 3b to detect particulate matter between these sensing electrodes. More specifically, the first soot detecting section 31 measures the value of electric current flowing between the sensing electrodes 3a and 3b.

Like the first soot detecting section 31, on a command from the overall control section 20, the second soot detecting section 32 measures the value of electric current flowing between the sensing electrodes 3b and 3c to detect particulate matter between the sensing electrodes 3b and 3c.

Similarly, the third soot detecting section 33, the fourth soot detecting section 34, the fifth soot detecting section 35, and the sixth soot detecting section 36 perform current value measurement to detect particulate matter between the sensing electrodes 3c and 3d, between the sensing electrodes 3d and 3a, between the sensing electrodes 3a and 3c, and between the sensing electrodes 3b and 3d, respectively. In cases where the sensing electrode 3a and the sensing electrode 3c are each defined as a positive electrode, and the sensing electrode 3b and the sensing electrode 3d are each defined as a negative electrode, then the sensing electrodes corresponding to the fifth soot detecting section 35, as well as the sensing electrodes corresponding to the sixth soot detecting section 36, are identical in polarity. Thus, neither of the fifth soot detecting section 35 and the sixth soot detecting section 36 performs the above-described current value measurement.

The heater control section 40 comprises, for example, a DC power supply set for 20 [V] to effect control of the heat-generating electrode 7 in a manner so as to heat to a predetermined temperature on a command from the overall control section 20.

The temperature detecting section 50 comprises a temperature sensor to measure the temperature of the heat-generating electrode 7 on a command from the heater control section 40.

The display section 60 is built as, for example, a liquid crystal display that shows the current values detected by the first to sixth soot detecting sections 31 to 36 on a command from the overall control section 20, the condition of particulate matter distribution, and the size of particulate matter, etc.

The following describes a method for determining the condition of distribution of particulate matter adherent to the sensing electrodes 3a to 3d and the size of the particulate matter.

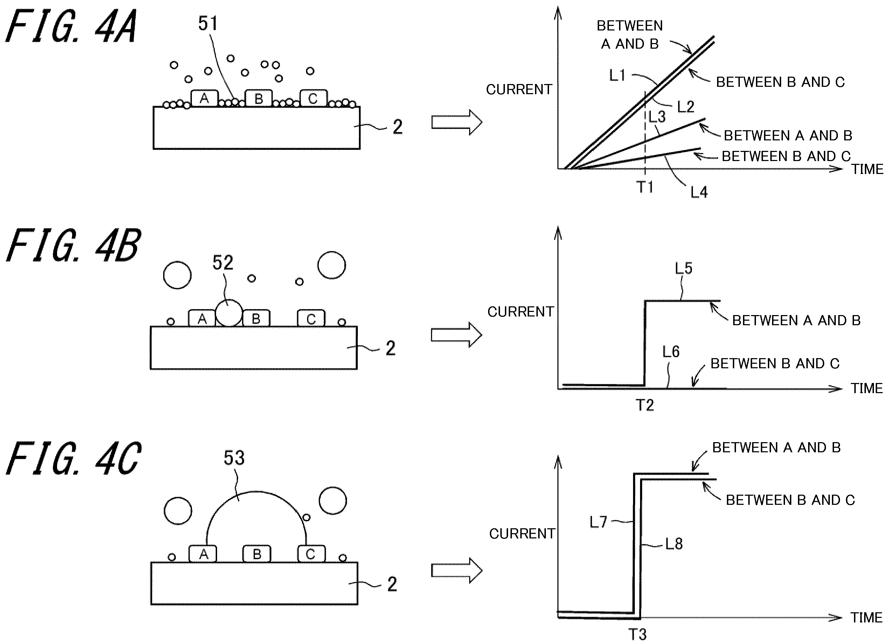

FIGS. 4A to 4C are schematic diagrams for explaining how leakage current varies according to the size of soot adherent to the sensor board. FIG. 4A is a schematic diagram for explaining leakage current variation under adhesion of minute soot to the sensor board. FIG. 4B is a schematic diagram for explaining leakage current variation under adhesion of medium-sized soot to the sensor board. FIG. 4C is a schematic diagram for explaining leakage current variation under adhesion of large-sized soot to the sensor board.

In FIG. 4A, there is shown a case where minute soot 51 has adhered to the sensor board. As seen from the right-hand graph, at a point of time T1, a leakage current flowing between electrodes A and B and a leakage current flowing between electrodes B and C have increased substantially equally (as indicated by Curve L1 and Curve L2). When the leakage current between the electrodes A and B and the leakage current between the electrodes B and C increase at different increasing rates (as indicated by Curve L3 and Curve L4), then it is determined that the soot distribution between the electrodes A and B and the soot distribution between the electrodes B and C differ from each other (lack of uniformity in soot distribution).

In FIG. 4B, there is shown a case where medium-sized soot 52 has adhered to the sensor board. As seen from the right-hand graph, at a point of time T2, only the leakage current between the electrodes A and B has increased sharply (as indicated by Curve L5). In this case, it is determined that medium-sized soot has adhered to the sensor board in the electrode A-to-electrode B range at the point of time T2.

In FIG. 4C, there is shown a case where large-sized soot 53 has adhered to the sensor board. As seen from the right-hand graph, at a point of time T3, both the leakage current between the electrodes A and B and the leakage current between the electrodes B and C have increased sharply. In this case, it is determined that large-sized soot has adhered to the sensor board both in the electrode A-to-electrode B range and in the electrode B-to-electrode C range at the point of time T3.

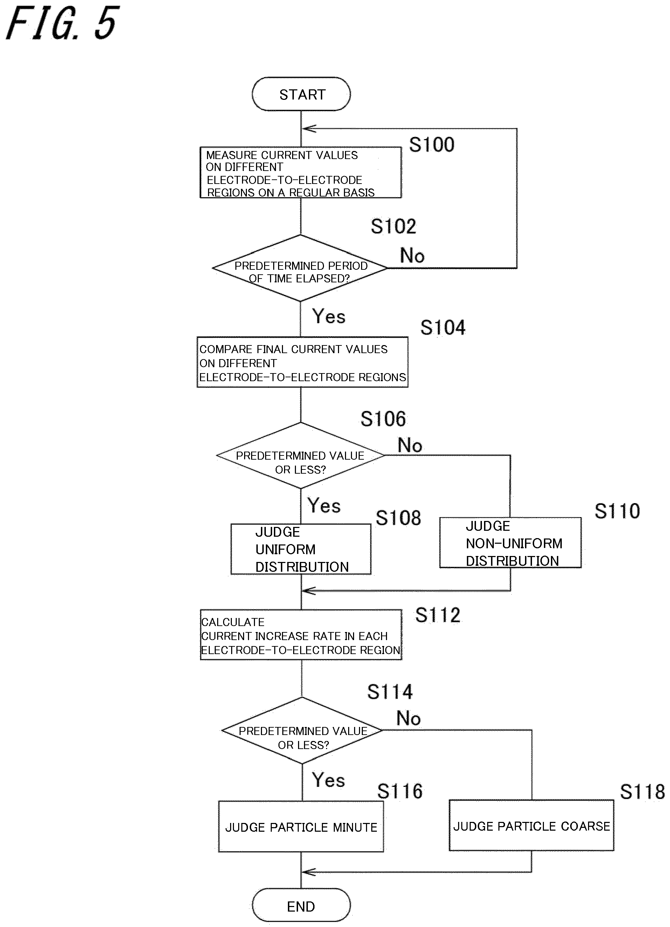

FIG. 5 is a flowchart showing an algorithm for determination of the distribution and size of detection targets in the sensor device according to the first example.

At the outset, the first to sixth soot detecting sections 31 to 36 perform current value measurement on a regular basis on a command from the overall control section 20 (S100), and, after a lapse of a predetermined period of time ("YES" at S102), the overall control section 20 effects a comparison of final current values on different electrode-to-electrode regions (S104).

When the result of the comparison showed that the final current value on each electrode-to-electrode region is less than or equal to a predetermined value ("YES" at S106), then the overall control section 20 judges that soot is distributed uniformly (S108).

On the other hand, when the result showed that the final current value on each electrode-to-electrode region exceeds the predetermined value ("NO" at S106), then the overall control section 20 judges that soot is distributed non-uniformly (S110).

Next, the overall control section 20 calculates the rate of current increase in each electrode-to-electrode region (S112). When the calculated value is less than or equal to a predetermined value ("YES" at S114), then the overall control section 20 judges that soot particle is minute (S116).

On the other hand, when the calculated value of current increase rate exceeds the predetermined value ("NO" at S114), then the overall control section 20 judges that soot particle is coarse (S118).

### (Second Example)

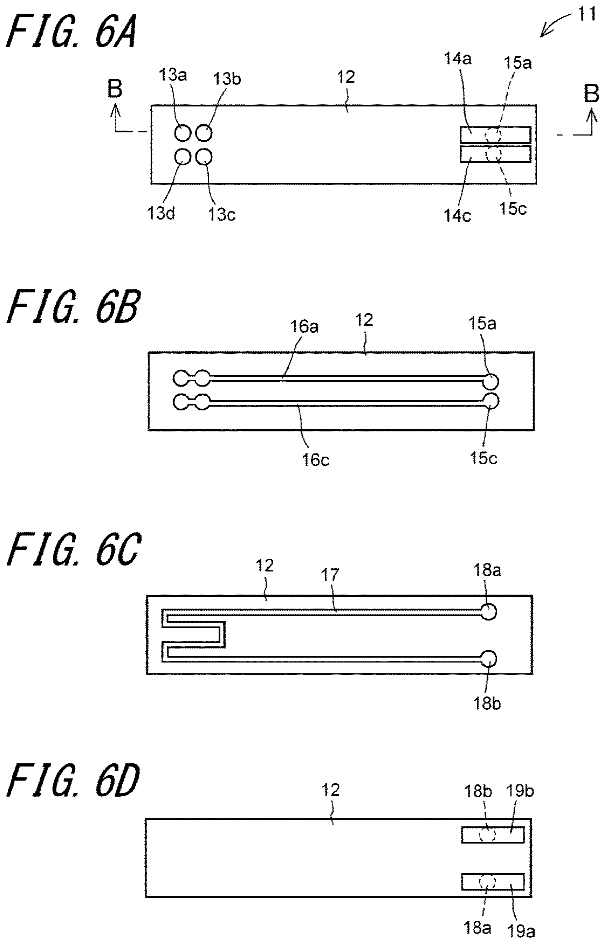

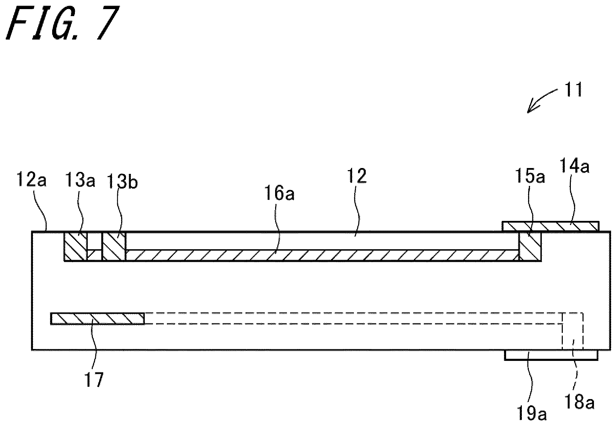

FIGS. 6A to 6D are drawings showing a structural example of a multilayer-structured sensor board according to a second example in the present disclosure. FIG. 6A is a top view of a sensor board 11; FIG. 6B is a view showing a wiring configuration in the second layer of the sensor board 11; FIG. 6C is a view showing a wiring configuration in the third layer of the sensor board 11; and FIG. 6D is a bottom view of the sensor board 11. In addition, FIG. 7 is a sectional view taken along the line B-B of FIG. 6A.

The sensor board 11 achieves, as its feature, constructional simplicity and cost reduction while narrowing a gap between sensing electrodes when adopted in a sensor device.

As shown in FIGS. 6A to 6D and FIG. 7, electrode terminals 14a and 14c, internal wiring lines 15a and 15c, and innerlayer wiring lines 16a and 16c are disposed at or embedded within the first layer or the second layer of the sensor board 11 corresponding to sensing electrodes 13a and 13b and sensing electrodes 13c and 13d. Moreover, a heat-generating electrode 17 is embedded within the third layer of the sensor board 11, and, internal wiring lines 18a and 18b and connection pads 19a and 19b are disposed at or embedded within the third layer or the fourth layer corresponding to the positive and negative sides of the heat-generating electrode 17.

For example, as is the case with the first example, the sensing electrodes 13a to 13d are each a cylindrical electrode having an upper surface thereof exposed at a first face 12a of an insulating substrate 12, and, each upper surface is flush with the first face 12a. Moreover, the sensing electrodes 13a and 13b are connected to a positive electrode of an external DC power supply (not shown) set for 50 [V] for example, whereas the sensing electrodes 13c and 13d are connected to a negative electrode of the DC power supply.

Thus, the sensing electrode 13a constitutes, in conjunction with the sensing electrode 13d, a pair of positive and negative sensing electrodes, and, the sensing electrode 13b constitutes, in conjunction with the sensing electrode 13c, a pair of positive and negative sensing electrodes. In the sensor board 11, a plurality of pairs of sensing electrodes have a common positive-negative electrode arrangement. Thus, a sensor device according to this example (not shown) can be implemented by the application of the sensor device 10 according to the first example (more specifically, only the first soot detecting section 31 is actuated in the sensor device). That is, the sensor device is operated in common with the sensor device 10, and thus its detailed description will be omitted.

### (Modified Examples)

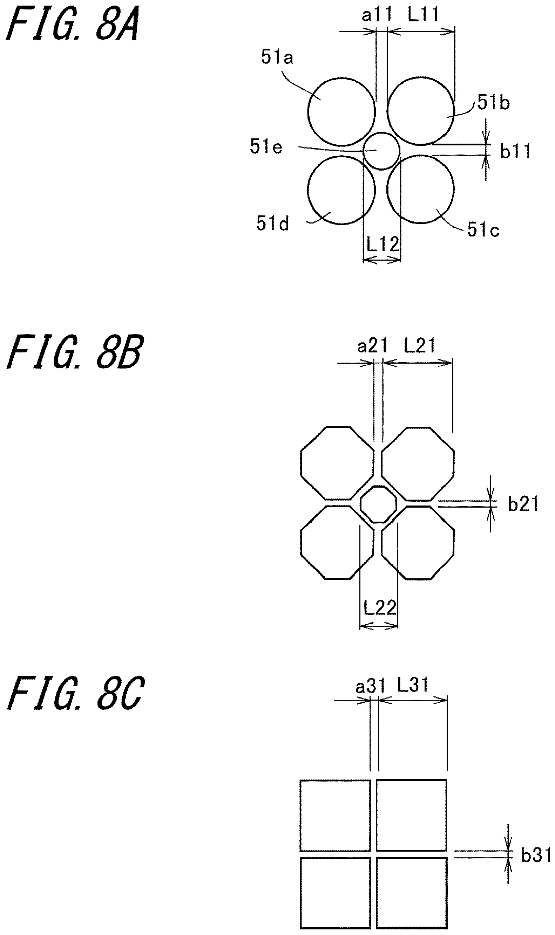

The following describes modified examples of the sensing electrode of the first and second examples. FIGS. 8A to 8C are drawings each showing modified examples of the sensing electrodes 3a to 3d or sensing electrodes 13a to 13d in respect of electrode configuration and electrode arrangement.

FIG. 8A is a view showing a modified example obtained by combining circular sensing electrodes having different diameters. In FIG. 8A, a sensing electrode 51e and each of sensing electrodes 51a to 51d, while being identically circular-shaped as seen from above, differ in diameter from each other (L11 is set at 50 µm, whereas L12 is set at 25 µm). The distance between the electrodes is set at 10 µm. In FIG. 8A, for example, where voltage application is effected in a manner such that the sensing electrode 51e becomes a positive electrode, and each of the sensing electrodes 51a to 51d becomes a negative electrode, four pairs of sensing electrodes are formed.

FIG. 8B is a view showing a modified example obtained by changing the circular profile of each sensing electrode shown in FIG. 8A to an octagonal profile. In FIG. 8B, as to electrode diameter and electrode distance, for example, L21 is set at 50 µm, a21 is set at 10 µm, and b21 is set at 10 µm.

FIG. 8C is a view showing a modified example obtained by changing the circular profile of the sensing electrode according to the first example to a square profile. In FIG. 8C, as to electrode size and electrode distance, for example, L31 is set at 50 µm, a31 is set at 10 µm, and b31 is set at 10 µm.

The profile of the sensing electrode of the above-described example is not limited to this, but may be an elliptical profile or other polygonal profile. Moreover, the functions of the first to sixth soot detecting sections 31 to 36 of the first embodiment may be integrated into a single first soot detecting section. In this case, detection of particulate matter (for example, measurement of leakage current, etc.) between the sensing electrodes is effected by operating switches provided in the first soot detecting section in a manner permitting sequential connection changeover.

### (Third Example)

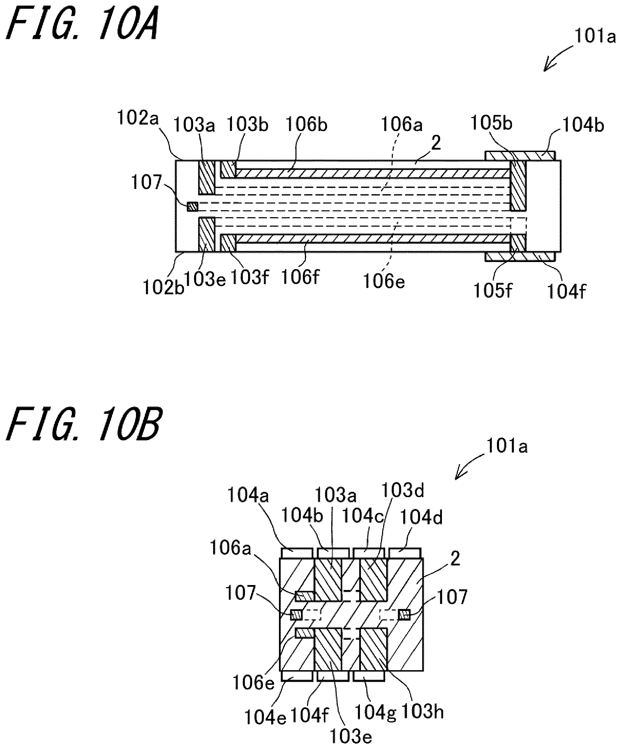

FIGS. 9A to 9G and FIGS. 10A and 10B are drawings showing a structural example of a sensor board according to a third example. FIG. 9A is a top view of a sensor board 101a according to this example; FIGS. 9B and 9C are views showing wiring configurations in the second and third layers, respectively, of the sensor board 101a; FIG. 9D is a view showing a heat-generating electrode configuration in the fourth layer of the sensor board 101a; FIGS. 9E and 9F are views showing wiring configurations in the fifth and sixth layers, respectively, of the sensor board 101a; and FIG. 9G is a bottom view of the sensor board 101a. In addition, FIG. 10A is a sectional view taken along the line C-C of FIG. 9A, and FIG. 10B is a sectional view taken along the line D-D of FIG. 9A.

Like the sensor board 1 according to the first example, the sensor board 101a is also used in a sensor device designed for PM detection. In the sensor board 101a, there are provided sensing electrodes, which are made at least as a pair of positive and negative electrodes, located at each of one surface of an insulating substrate in the form of a rectangular prism (for example, a top face corresponding to the first face of the sensor board according to the first example) and other surface than the one surface thereof (for example, a back face). Part of each of the positive and negative electrodes constituting the pair of sensing electrodes is exposed at the one surface or the other surface of the insulating substrate. In the case shown in FIGS. 9A to 9G, there are provided sensing electrodes 103a to 103h, each in the form of a column, constituting pairs of the positive and negative sensing electrodes, and innerlayer wiring lines 106a to 106h embedded within the insulating substrate 2 corresponding to the sensing electrodes 103a to 103h. The pairs of positive and negative sensing electrodes are electrodes in column form (hereafter also referred to as "columnar electrodes"), or comb-like electrodes in an interdigitated array form. Alternatively, the sensing electrodes may be constructed of a columnar electrode and interdigitated comb-like electrodes disposed in mutually corresponding relation.

As shown in FIGS. 9A to 9G and FIGS. 10A and 10B, in the first to third layers of the sensor board 101a, there are provided the sensing electrodes 103a to 103d, and, electrode terminals 104a to 104d, internal wiring lines 105a to 105c, and the innerlayer wiring lines 106a to 106d corresponding to the sensing electrodes 103a to 103d. Moreover, the fourth layer of the sensor board 101a has a heat-generating electrode 107 embedded therein, and also has the internal wiring lines 105b and 108a corresponding to the heat-generating electrode 107.

As shown in FIGS. 9A, 9D, and 9G, a region including the sensing electrodes 103a to 103d for detection of particulate matter (that is, a region where particulate matter is expected to accumulate) is defined as a sensing region 109. The heat-generating electrode 107 is embedded along the outer periphery of the sensing region 109 as seen in plan perspective view.

Likewise, in the seventh, sixth, and fifth layers of the sensor board 101a, there are provided the sensing electrodes 103e to 103h, and, electrode terminals 104e to 104g, internal wiring lines 105e to 105g, and the innerlayer wiring lines 106e to 106h corresponding to the sensing electrodes 103e to 103h.

The sensing electrodes 103a to 103d, as well as the sensing electrodes 103e to 103h, are connected, via the electrode terminals 104a to 104d, as well as the electrode terminals 104e to 104g, to a positive or negative electrode of an external DC power supply (not shown). Moreover, the heat-generating electrode 107 is connected, via the electrode terminals 104b and 104d, to the external DC power supply.

Although the electrode terminal 104b is connected to both of the negative electrode in the group of the sensing electrodes 103a to 103d and the negative side of the heat-generating electrode 107 as a common negative terminal, an extra terminal specific to the negative side of the heat-generating electrode 107 may be provided without shared use of the electrode terminal 104b. Moreover, the electrode terminals 104a to 104g may be further provided with a connecting member such as a connection pad, not shown, to establish connection with an external power supply, a sensing circuit for measurement, etc. The following describes specifics of the individual constituent components of this example.

The sensing electrodes 103a to 103h are each a cylindrical electrode, part of which is exposed at one surface (first face) 2a or the other surface (second face) 2b of the insulating substrate 2. In this case, it is advisable that the upper surface of each of the sensing electrodes 103a to 103d is flush with the one surface 2a, and the upper surface of each of the sensing electrodes 103e to 103h is flush with the other surface 2b.

The sensing electrode 103a, 103c is connected, via the internal wiring line 105a, 105c connected to the innerlayer wiring line 106a, 106c and the electrode terminal 104a, 104c, to a positive electrode of an external DC power supply set for 50 [V], for example. Moreover, the sensing electrode 103b, 103d is connected, via the internal wiring line 105b connected to the innerlayer wiring line 106b and the electrode terminal 104b, to a negative electrode of the DC power supply.

Like the sensing electrodes 103a to 103d, the sensing electrode 103e, 103g is connected, via the internal wiring line 105e, 105g connected to the innerlayer wiring line 106e, 106g and the electrode terminal 104e, 104g, to the positive electrode of the DC power supply. Moreover, the sensing electrode 103f, 103h is connected, via the internal wiring line 105f connected to the innerlayer wiring line 106f and the electrode terminal 104f, to the negative electrode of the DC power supply.

Thus, the sensing electrode 103a constitutes, in conjunction with the sensing electrode 103b or the sensing electrode 103d, a pair of positive and negative sensing electrodes, and, the sensing electrode 103c constitutes, in conjunction with the sensing electrode 103b or the sensing electrode 103d, a pair of positive and negative sensing electrodes. Moreover, the sensing electrode 103e constitutes, in conjunction with the sensing electrode 103f or the sensing electrode 103h, a pair of positive and negative sensing electrodes, and, the sensing electrode 103g constitutes, in conjunction with the sensing electrode 103f or the sensing electrode 103h, a pair of positive and negative sensing electrodes.

Like the heat-generating electrode 7 of the first example, the heat-generating electrode 107 is heated to, for example, 700 [°C] for decomposition and removal of particulate matter adherent to the vicinity of the sensing electrodes 103a to 103d, as well as the vicinity of the sensing electrodes 103e to 103h.

The insulating substrate 2 in the form of, for example, a rectangular prism, serves as a base body in which the pair of sensing electrodes, as well as the pair of sensing electrodes and the heat-generating electrode, are disposed so as to be electrically insulated from each other.

The sensing electrodes 103a to 103h are each made as a via (cylindrical) electrode. For example, each sensing electrode is 50 µm in diameter, and, the distance between adjacent sensing electrodes is set at 10 µm. Note that the diameter of each of the sensing electrodes 103a to 103h may be adjusted within the range of 20 µm to 100 µm, and the distance between adjacent sensing electrodes may be adjusted within the range of 5 µm to 50 µm.

Where the sensing electrodes 103a to 103h are each made as a via electrode, the insulating substrate 2 including such sensing electrodes 103a to 103h can be produced by using a method similar to a conventional via electrode-equipped circuit board manufacturing method.

As described above, the sensing electrodes 103a to 103h serve to detect particulate matter in an environment where the sensor board is installed in the sensor device. Upon adhesion of particulate matter such as soot to between a pair of electrodes (for example, between the sensing electrodes 103a and 103b, or between the sensing electrodes 103b and 103d), the electrical resistance between the pair of sensing electrodes varies, causing a change in leakage current flowing between the electrodes. The detection of the change in leakage current enables acquisition of information about particulate matter existing between the pair of sensing electrodes.

Thus, the sensing electrodes 103a to 103h contain a metal material that allows detection of the change in leakage current. Oxidation-resistant platinum may be used as the metal material contained in the sensing electrodes 103a to 103h.

Moreover, a metal material similar to the metal material used for the earlier described sensing electrodes 3a to 3d may be used for the sensing electrodes 103a to 103h.

A metallic plating layer similar to the metallic plating layer formed on the sensing electrodes 3a to 3d may be deposited on the surfaces of the sensing electrodes 103a to 103h, the electrode terminals 104a to 104g, etc. by electroplating or electroless plating.

Each of the innerlayer wiring lines 106a to 106d is formed in the second or third layer of the insulating substrate 2 to provide electrical connection between the sensing electrodes 103a to 103d and the electrode terminals 104a to 104d in the first layer. Likewise, each of the innerlayer wiring lines 106e to 106h is formed in the sixth or fifth layer of the insulating substrate 2 to provide electrical connection between the sensing electrodes 103e to 103h and the electrode terminals 104e to 104g in the seventh layer.

The heat-generating electrode 107 is formed of a metal material similar to the metal material used for the heat-generating electrode 7, and may further contain an inorganic component.

The sensing electrodes 103a to 103h can be formed by the same production method as that of the sensing electrodes 3a to 3d of the first example. Likewise, the electrode terminals 104a to 104g can be formed by the same production method as that of the electrode terminals 4a to 4d, the internal wiring lines 105a to 105g can be formed by the same production method as that of the internal wiring lines 5a to 5d, the innerlayer wiring lines 106a to 106h can be formed by the same production method as that of the innerlayer wiring lines 6a to 6d, and the heat-generating electrode 107 can be formed by the same production method as that of the heat-generating electrode 7.

The sensor board 101a achieves an improvement in the degree of sensitivity for detection of particulate matter without the necessity of sensor resizing, and is also capable of long-duration continuous measurement. Moreover, the sensor board 101a achieves further improvement in the degree of sensitivity for detection by using very closely spaced-apart columnar sensing electrodes.

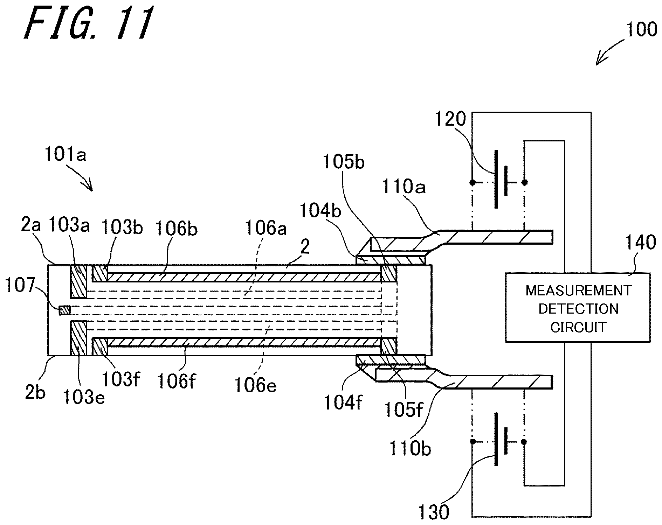

FIG. 11 is a sectional view showing a structural example of a sensor device utilizing the sensor board according to the present example. As shown in FIG. 11, to detect particulate matter, a sensor device 100 comprises the sensor board 101a, necessary power supplies 120 and 130, and a measurement detection circuit 140. Note that constituent components common to the construction shown in FIG. 11 and the construction shown in FIGS. 9A to 9G, etc. will be identified with the same reference symbol, and overlapping descriptions will be omitted.

In the sensor device 100, for example, when a DC voltage of about 50 volts [V] from the power supply 120, 130 is applied to the sensing electrodes 103a to 130d, 103e to 103h, then the measurement detection circuit 140 detects leakage current on the basis of particulate matter accumulated between the positive and negative electrodes, and calculates the resistance between the positive and negative electrodes, etc.

The power supply 120, 130 and the measurement detection circuit 140 can be implemented by the application of the power supply and the measurement detection circuit (that is, the overall control section 20, the first to sixth soot detecting sections 31 to 36, the heater control section 40, the temperature detecting section 50, the display section 60, etc.) of the first embodiment. Where a plurality of pairs of sensing electrodes are provided, just like the sensing electrodes 103a to 130d and the sensing electrodes 103e to 103h of the present example, the measurement detection circuit 140 effects detection of leakage current, etc. for each pair of sensing electrodes on a time-division basis. In FIG. 11, a conductor for connection, such as a conductive connecting member, used to provide electrical connection between a lead terminal 110a, 110b and the power supply 120, 130 is schematically shown by a phantom line (chain double-dashed line).

In FIG. 11, like the electrode terminal 104a, etc., the lead terminals 110a and 110b are not directly conducive to particulate matter detection. Thus, materials used to form the lead terminals 110a and 110b are suitably selected with consideration given to an environment where the sensor device is operated, the productivity of the sensor board 101a, cost effectiveness, and other conditions. For example, the use of the lead terminals 110a and 110b formed of a highly oxidation-resistant metal material such as platinum or gold brings about an advantage in reliability to the sensor device 100. Moreover, in the capital interest of economy, etc., the lead terminals 110a and 110b may be formed of an iron-based alloy such as an iron-nickel-cobalt alloy, or may be constructed of a copper-made member, for example. Where the lead terminals 110a and 110b are formed of the iron-based alloy, their exposed surfaces may be formed with a plating layer such as a gold plating layer for protection.

For example, the lead terminal 110a, 110b is joined to the electrode terminal 104a, etc. by a brazing material (not marked with reference symbol) such as silver solder (silver-copper solder) or gold solder. Like the materials used for the lead terminals 110a and 110b, a brazing material for use is suitably selected with consideration given to various conditions set for the manufacture or usage of the sensor board 101a.

Although the sensing electrodes are formed from a 2 by 2 matrix of columnar electrodes (four electrodes in total) in the present embodiment, the number of the sensing electrodes is not limited to this. For example, the sensing electrodes may be formed from an n by m matrix of electrodes (wherein n is greater than or equal to 2, and m is less than or equal to 200).

Although the preceding example has been described with respect to the case where the sensing electrode is disposed at the back face opposed to the one surface as the other surface, for example, in addition to the back face, two side faces contiguous to the one surface may be provided with the sensing electrode.

Moreover, the columnar sensing electrode of the above-described example is not limited to the cylindrical electrode, but may be given the form of an elliptical column or other polygonal column.

### (Fourth Example)

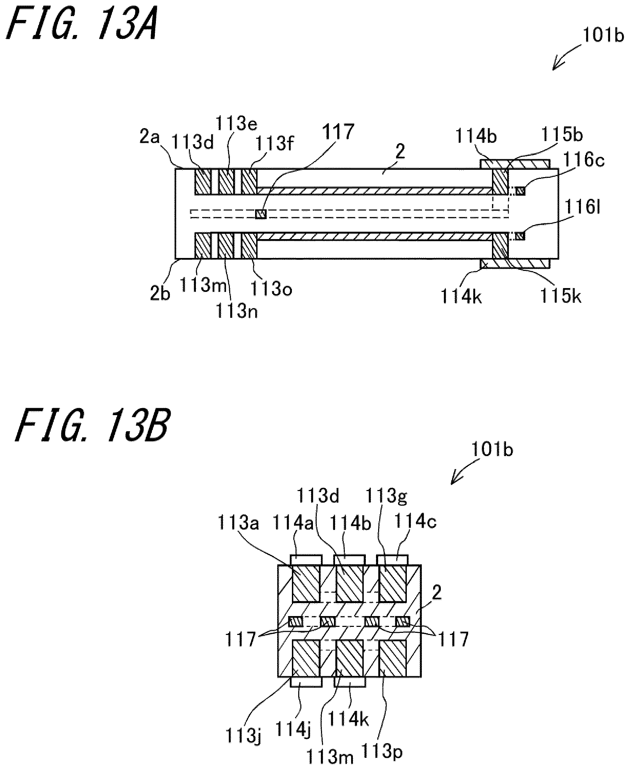

FIGS. 12A to 12E are drawings showing a structural example of a sensor board according to a fourth example. FIG. 12A is a top view of a sensor board 101b according to this example; FIGS. 12B and 12D are views showing an example of wiring configurations in the second and fourth layers, respectively, of the sensor board 101b; FIG. 12C is a view showing an example of a heat-generating electrode configuration in the third layer of the sensor board 101b; and FIG. 12E is a bottom view of the sensor board 101b. In addition, FIG. 13A is a sectional view taken along the line E-E of FIG. 12A, and FIG. 13B is a sectional view taken along the line F-F of FIG. 12A.

Note that constituent components common to the example shown in FIGS. 12A to 12E, 13A, and 13B and the preceding example shown in FIGS. 9A to 9G, 10A, and 10B will be identified with the same reference symbol, and overlapping descriptions will be omitted.

As shown in FIGS. 12A to 12E, 13A, and 13B, in the first or second layer of the sensor board 101b, there are provided sensing electrodes 113a to 113i, and, electrode terminals 114a to 114c, internal wiring lines 115a, 115b, and 118a, and innerlayer wiring lines 116a to 116c corresponding to the sensing electrodes 113a to 113i. Moreover, the third layer of the sensor board 101b has a heat-generating electrode 117 embedded therein, and also has the internal wiring lines 115b and 118a corresponding to the heat-generating electrode 117.

Likewise, in the fifth or fourth layer of the sensor board 101b, there are provided sensing electrodes 113j to 113r, and, electrode terminals 114j and 114k, internal wiring lines 115j and 115k, and innerlayer wiring lines 116j to 1161 corresponding to the sensing electrodes 113j to 113r.

As is the case with the first example, for example, the sensing electrodes 113a to 113i and the sensing electrodes 113j to 113r are each a cylindrical electrode having an upper surface thereof exposed at one surface 2a or the other surface 2b of an insulating substrate 2, and, each upper surface is flush with the one or other surface. The sensing electrodes 113d to 113f and the sensing electrodes 113m to 113o are connected to a positive electrode of an external DC power supply (not shown) set for 50 [V] for example, whereas the sensing electrodes 113a to 113c, those 113g to 113i, those 113j to 1131, and those 113p to 113r are connected to a negative electrode of the DC power supply.

Thus, the sensing electrodes 113d to 113f constitute, in conjunction with the sensing electrodes 113a to 113c or the sensing electrodes 113g to 113i, a pair of positive and negative sensing electrodes, and, the sensing electrodes 113m to 113o constitute, in conjunction with the sensing electrodes 113j to 1131 or the sensing electrodes 113p to 113r, a pair of positive and negative sensing electrodes. As seen from FIGS. 9B and 9D, the sensing electrodes 113a to 113i and the sensing electrodes 113j to 113r are designed so that those aligned in a horizontal row are interchangeable. This makes it possible to simplify the configurations of the innerlayer wiring lines 116a to 116c corresponding to the sensing electrodes 113a to 113i and the innerlayer wiring lines 116j to 1161 corresponding to the sensing electrodes 113j to 113r, and thereby achieve cost reduction.

Thus, like the third example, the sensor board 101b achieves an improvement in the degree of sensitivity for detection of particulate matter without the necessity of sensor resizing, and is also capable of long-duration continuous measurement. Moreover, the sensor board 101b has a larger number of columnar sensing electrodes, yet can achieve simplification in the configuration of the innerlayer wiring line provided within the insulating substrate with no increase in cost.

On account of being basically identical in workings with the sensor device incorporating the sensor board 101a, a sensor device according to this example (not shown) can be implemented by the application of the sensor device 100 according to the third example. Thus, the description of operation of the sensor device will be omitted.

### (Fifth Example)

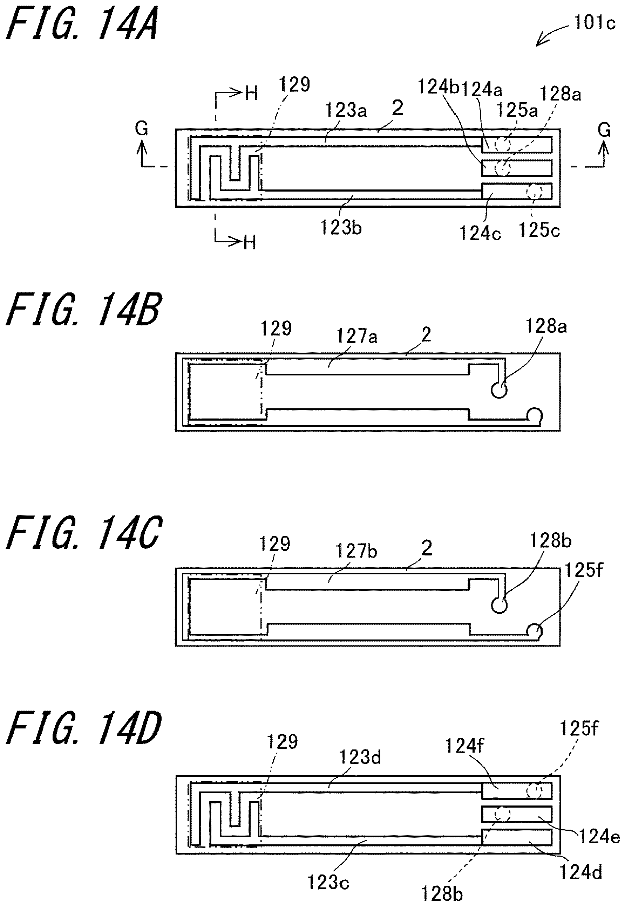

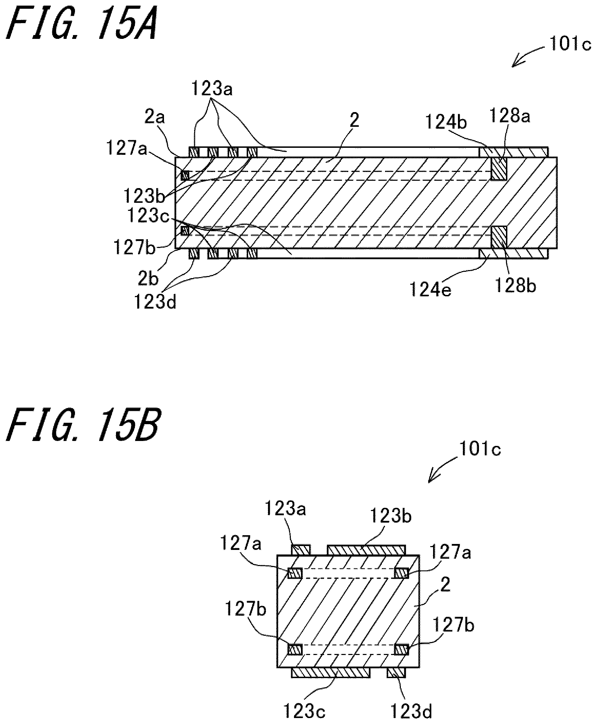

FIGS. 14A to 14D are drawings showing a structural example of a sensor board according to a fifth example. FIG. 14A is a top view of a sensor board 101c according to this example; FIGS. 14B and 14C are views showing an example of heat-generating electrode configurations in the second and third layers, respectively, of the sensor board 101c; and FIG. 14D is a bottom view of the sensor board 101c. In addition, FIG. 15A is a sectional view taken along the line G-G of FIG. 14A, and FIG. 15B is a sectional view taken along the line H-H of FIG. 14A.

The sensor board 101c according to this example comprising interdigitated comb-like electrodes serving as sensing electrodes can be produced by a conventional manufacturing method. Moreover, constituent components common to the example shown in FIGS. 14A to 14D, 15A, and 15B and the preceding example shown in FIGS. 9A to 9G, 10A, and 10B will be identified with the same reference symbol, and overlapping descriptions will be omitted.

As shown in FIGS. 14A to 14D, 15A, and 15B, the first and fourth layers of the sensor board 101c are provided with sensing electrodes 123a and 123b and sensing electrodes 123c and 123d, respectively, and, the second and third layers of the sensor board 101c are provided with heat-generating electrodes 127a and 127b, respectively. As shown in FIGS. 14A and 14D, as is the case with the third example, a region including the sensing electrodes 123a and 123b or the sensing electrodes 123c and 123d is defined as a sensing region 129. The heat-generating electrode 127a or 127b is embedded along the outer periphery of the sensing region 129 as seen in plan perspective view.

The sensing electrodes 123a to 123d in interdigitated array form are exposed at one surface 2a or the other surface 2b of an insulating substrate. The sensing electrode 123a constitutes, in conjunction with the sensing electrode 123b, a pair of positive and negative sensing electrodes, and, the sensing electrode 123c constitutes, in conjunction with the sensing electrode 123d, a pair of positive and negative sensing electrodes. Moreover, the sensing electrodes 123a and 123c are connected to a positive electrode of an external DC power supply (not shown) set for 50 [V], for example, and, the sensing electrodes 123b and 123d are connected to a negative electrode of the DC power supply.

Thus, like the third example, the sensor board 101c can achieve an improvement in the degree of sensitivity for detection of particulate matter without the necessity of sensor resizing, and is also capable of long-duration continuous measurement. Moreover, an interdigitated array of comb-like electrodes in the first layer and an interdigitated array of comb-like electrodes in the fourth layer are disposed in symmetrical relation. This arrangement can suppress deformation caused by thermal stress during a firing process.

A sensor device according to this example (not shown) can be implemented by the application of the sensor device 100 according to the third example, and the description of operation of the sensor device will thus be omitted.

### (Sixth Example)

FIGS. 16A to 16F are drawings showing a structural example of a sensor board according to a sixth example. A sensor board 101d according to this example is constructed by providing additional electrodes in column form (hereafter referred to as "columnar electrodes") 133a to 133e and 134a to 134d and columnar electrodes 135a to 135d and 136a to 134e in the sensor board 101c according to the fifth example. The columnar electrodes 133a to 133e and the columnar electrodes 134a to 134d are connected to corresponding one of the interdigitated comb-like electrodes 123a and 123b above, and the columnar electrodes 135a to 135d and the columnar electrodes 136a to 134e are connected to corresponding one of the interdigitated comb-like electrodes 123c and 123d below.

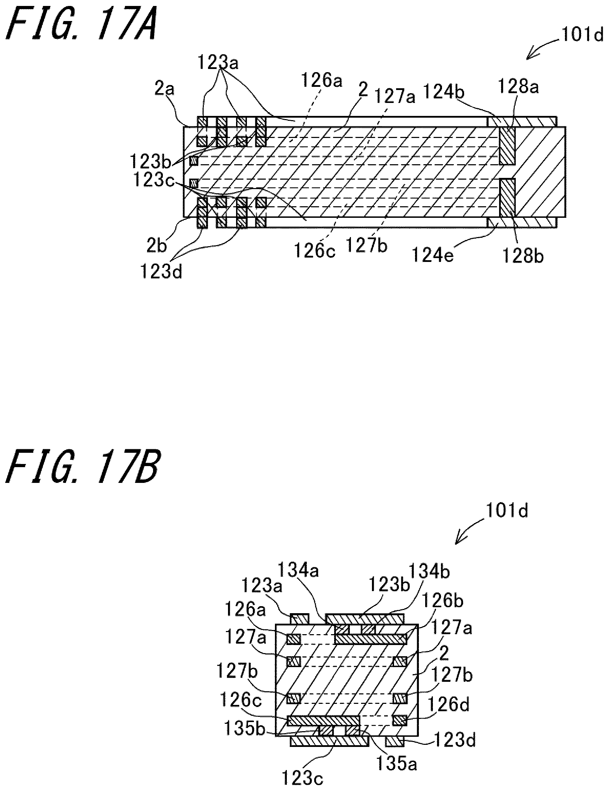

FIG. 16A is a top view of the sensor board 101d according to this example, and FIG. 16B is a view showing an example of a wiring configuration in the second layer of the sensor board 101d according to this example. Moreover, FIGS. 16C and 16D are views showing an example of heat-generating electrode configurations in the third and fourth layers, respectively, of the sensor board 101d, and FIG. 16E is a view showing an example of a wiring configuration in the fifth layer of the sensor board 101d. FIG. 16F is a bottom view of the sensor board 101d. In addition, FIG. 17A is a sectional view taken along the line I-I of FIG. 16A, and FIG. 17B is a sectional view taken along the line J-J of FIG. 16A.

The sensor board 101d according to this example comprising the interdigitated comb-like electrodes 123a to 123d and the columnar electrodes 133a to 133e, 134a to 134d, 135a to 135d, and 136a to 136e can be produced by a conventional manufacturing method. Moreover, constituent components common to the example shown in FIGS. 16A to 16F, 17A, and 17B and the preceding example shown in FIGS. 14A to 14D, 15A, and 15B will be identified with the same reference symbol, and overlapping descriptions will be omitted.

As shown in FIG. 16B, the second layer of the sensor board 101d has the columnar electrodes 133a to 133e corresponding to the comb-like electrode 123a and the columnar electrodes 134a to 134d corresponding to the comb-like electrode 123b. Likewise, as shown in FIG. 16E, the fifth layer of the sensor board 101d has the columnar electrodes 135a to 135d corresponding to the comb-like electrode 123c, and the columnar electrodes 136a to 136e corresponding to the comb-like electrode 123d.

In the sensor board 101d thereby constructed, the comb-like electrode 123a is securely held by the columnar electrodes 133a to 133e, and the comb-like electrode 123b is securely held by the columnar electrodes 134a to 134d, and also the comb-like electrode 123c is securely held by the columnar electrodes 135a to 134d, and the comb-like electrode 123d is securely held by the columnar electrodes 136a to 136e. This arrangement can prevent separation of the interdigitated comb-like electrodes 123a to 123d.

A sensor device according to this example (not shown) can be implemented by the application of the sensor device 100 according to the third example, and the description of operation of the sensor device will thus be omitted.

### (Seventh Example)

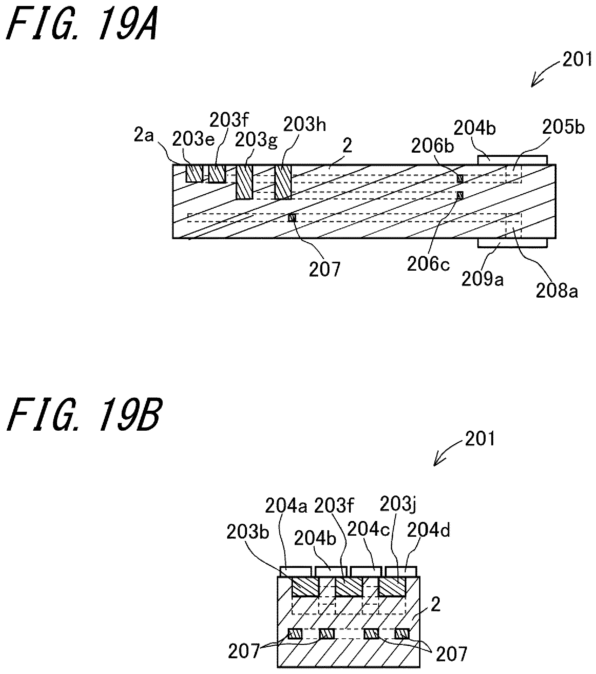

FIGS. 18A to 18E and FIGS. 19A and 19B are drawings showing a structural example of a sensor board according to a seventh example. FIG. 18A is a top view of a sensor board 201 according to this example; FIGS. 18B and 18C are views showing wiring configurations in the second and third layers, respectively, of the sensor board 201; FIG. 18D is a view showing a heat-generating electrode configuration in the fourth layer of the sensor board 201; and FIG. 18E is a bottom view of the sensor board 201. In addition, FIG. 19A is a sectional view taken along the line K-K of FIG. 18A, and FIG. 19B is a sectional view taken along the line L-L of FIG. 18A.

Like the sensor board 1 according to the first example, the sensor board 201 is also used in a sensor device designed for PM detection. The sensor board 201 is constructed of an insulating substrate shaped in a flat plate, the surface of which is provided with a first positive sensing electrode and a first negative sensing electrode adjacent to the first positive sensing electrode, and a second positive sensing electrode and a second negative sensing electrode adjacent to the second positive sensing electrode, constituting pairs of positive and negative electrodes. The sensor board 201 is characterized in that, at least in one direction (for example, in a direction x shown in FIG. 18A), a distance between the first positive sensing electrode and the first negative sensing electrode, which is defined as a first electrode distance, and a distance between the second positive sensing electrode and the second negative sensing electrode, which is defined as a second electrode distance, differ from each other.

In the case shown in FIGS. 18A to 18E, there are provided columnar sensing electrodes 203a to 2031 constituting pairs of the positive and negative electrodes, innerlayer wiring lines 206a to 206d embedded within the insulating substrate 2 corresponding to the sensing electrodes 203a to 2031. As will hereafter be described, the pairs of positive and negative sensing electrodes are not limited to the columnar electrodes, but may be of interdigitated comb-like electrodes. Alternatively, the sensing electrodes may be constructed of a columnar electrode and interdigitated comb-like electrodes disposed in mutually corresponding relation.

As shown in FIGS. 18A to 18E and FIGS. 19A and 19B, in the first to third layers of the sensor board 201, there are provided the sensing electrodes 203a to 2031, and, electrode terminals 204a to 204d, internal wiring lines 205a to 205d, and the innerlayer wiring lines 206a to 206d corresponding to the sensing electrodes 203a to 2031. Moreover, the fourth layer of the sensor board 201 has a heat-generating electrode 207 embedded therein, and also has internal wiring lines 208a and 208b and connection pads 209a and 209b corresponding to the heat-generating electrode 207.

The sensing electrodes 203a to 2031 are connected, via the corresponding electrode terminals 204a to 204d, to a positive or negative electrode of an external DC power supply (not shown). Moreover, the heat-generating electrode 207 is connected, via the connection pads 209a and 209b, to the external DC power supply. The following describes specifics of the individual constituent components of this example .

The sensing electrodes 203a to 2031 are each a cylindrical electrode, part of which is exposed at one surface 2a of the insulating substrate 2. In this case, the upper surface of each of the sensing electrodes 203a to 2031 may be flush with the one surface 2a.

The sensing electrode 203a, 203e, 203i is connected, via the internal wiring line 205a connected to the innerlayer wiring line 206a and the electrode terminal 204a, to the positive electrode of the external DC power supply set for 50 [V], for example, and also the sensing electrode 203c, 203g, 203k is connected, via the internal wiring line 205c connected to the innerlayer wiring line 206c and the electrode terminal 204c, to the positive electrode of the external DC power supply. Moreover, the sensing electrode 203b, 203f, 203j is connected, via the internal wiring line 205b connected to the innerlayer wiring line 206b and the electrode terminal 204b, to the negative electrode of the external DC power supply, and also the sensing electrode 203d, 203h, 2031 is connected, via the internal wiring line 205d connected to the innerlayer wiring line 206d and the electrode terminal 204d, to the negative electrode of the external DC power supply.

Thus, in the sensing electrodes 203a to 2031, each of groups of three aligned in a vertical row (for convenience these groups are defined, in left-to-right order, "electrode group A", "electrode group B", "electrode group C", and "electrode group D", respectively) exhibits one and the same positive or negative polarity. The electrode group A consisting of the sensing electrodes 203a, 203e, and 203i constitutes, in conjunction with the electrode group B consisting of the sensing electrodes 203b, 203f, and 203j, a pair of positive and negative sensing electrodes, and, the electrode group C consisting of the sensing electrodes 203c, 203g, and 203k constitutes, in conjunction with the electrode group D consisting of the sensing electrodes 203d, 203h, and 2031, a pair of positive and negative sensing electrodes.

Moreover, the electrode groups A to D are disposed with a gradual increase in electrode distance in the x direction, that is; they are disposed with various spacings. For example, as shown in FIG. 18B, given that a distance between the electrode group A and the electrode group B is "d11", then a distance between the electrode group B and the electrode group C defined as "d12" is equal to a value corresponding to "2d11", and a distance between the electrode group C and the electrode group B defined as "d13" is equal to a value corresponding to "4d11". By arranging the electrode groups with a gradual increase in electrode distance, it is possible to effect long-duration continuous detection while allowing responsivity regardless of the concentration of particulate matter contained in exhaust gas.

Although the vertically-aligned three sensing electrodes are made as interchangeable electrodes of the same positive or negative polarity in the case given above, horizontally-aligned three sensing electrodes may be made similarly as interchangeable electrodes instead.

Like the heat-generating electrode 7 of the first embodiment, the heat-generating electrode 207 is heated to, for example, 700 [°C] for decomposition and removal of particulate matter adherent to the vicinity of the sensing electrodes 203a to 2031.

The insulating substrate 2 in the form of, for example, a flat plate, serves as a base body in which a pair of sensing electrodes, as well as a pair of sensing electrodes and the heat-generating electrode 207, are disposed so as to be electrically insulated from each other.

The sensing electrodes 203a to 2031 are each made as a columnar electrode (for example, a cylindrical electrode). For example, each sensing electrode has a diameter of 20 µm to 100 µm, and, the distance between adjacent sensing electrodes is adjusted within the range of 5 µm to 50 µm.

Where the sensing electrodes 203a to 2031 are each made as a columnar electrode, the insulating substrate 2 including such sensing electrodes 203a to 2031 can be produced by using a method similar to a conventional via (through conductor)-equipped circuit board manufacturing method.

As described above, the sensing electrodes 203a to 2031 serve to detect particulate matter in an environment where the sensor board is installed in the sensor device. Upon adhesion of particulate matter such as soot to between a pair of electrodes (for example, between the sensing electrodes 203a and 203b, or between the sensing electrodes 203c and 203d), the electrical resistance between the pair of sensing electrodes varies, causing a change in leakage current flowing between the electrodes. The detection of the change in leakage current enables acquisition of information about particulate matter existing between the paired sensing electrodes.

Thus, the sensing electrodes 203a to 2031 contain a metal material which allows detection of the change in leakage current. Oxidation-resistant platinum may be used as the metal material contained in the sensing electrodes 203a to 2031.

Moreover, a metal material similar to the metal material used for the earlier described sensing electrodes 3a to 3d may be used for the sensing electrodes 203a to 2031.

A metallic plating layer similar to the metallic plating layer formed on the sensing electrodes 3a to 3d may be deposited on the surfaces of the sensing electrodes 203a to 2031, the electrode terminals 204a to 204d, etc. by electroplating or electroless plating.

Each of the innerlayer wiring lines 206a to 206d is formed in the second or third layer of the insulating substrate 2 to provide electrical connection between the sensing electrodes 203a to 2031 and the electrode terminals 204a to 204d in the first layer.

The heat-generating electrode 207 is formed of a metal material similar to the metal material used for the heat-generating electrode 7.

The sensing electrodes 203a to 2031 can be formed by the same production method as that of the sensing electrodes 3a to 3d of the first example. Likewise, the electrode terminals 204a to 204d can be formed by the same production method as that of the electrode terminals 4a to 4d, the internal wiring lines 205a to 205d can be formed by the same production method as that of the internal wiring lines 5a to 5d, the innerlayer wiring lines 206a to 206d can be formed by the same production method as that of the innerlayer wiring lines 6a to 6d, and the heat-generating electrode 207 can be formed by the same production method as that of the heat-generating electrode 7.

Thus, the sensor board 201 is capable of long-duration continuous detection while allowing responsivity regardless of the concentration of particulate matter contained in exhaust gas.

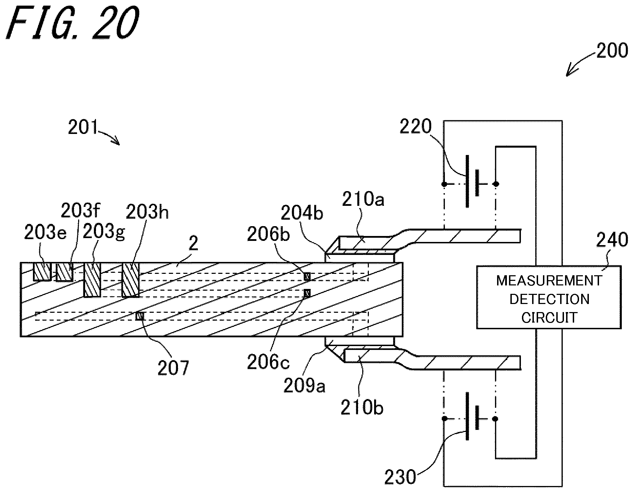

FIG. 20 is a sectional view showing a structural example of a sensor device utilizing the sensor board according to the present example. As shown in FIG. 20, to detect particulate matter, a sensor device 200 comprises the sensor board 201, necessary power supplies 220 and 230, and a measurement detection circuit 240. Note that constituent components common to the construction shown in FIG. 20 and the construction shown in FIGS. 18A to 18E, etc. will be identified with the same reference symbol, and overlapping descriptions will be omitted.

In the sensor device 200, for example, when a DC voltage of about 50 volts [V] from the power supply 220, 230 is applied to the sensing electrodes 203a to 2031, then the measurement detection circuit 240 detects leakage current on the basis of particulate matter accumulated between the positive and negative electrodes, and calculates the resistance between the positive and negative electrodes, etc.

The power supply 220, 230 and the measurement detection circuit 240 can be implemented by the application of the power supply and the measurement detection circuit (that is, the overall control section 20, the first to sixth soot detecting sections 31 to 36, the heater control section 40, the temperature detecting section 50, the display section 60, etc.) of the first example. Where a plurality of pairs of sensing electrodes are provided, just like the sensing electrodes 203a to 2031 of the present example, the measurement detection circuit 240 effects detection of leakage current, etc. for each pair of sensing electrodes on a time-division basis. In FIG. 20, a conductor for connection, such as a conductive connecting member, used to provide electrical connection between a lead terminal 210a, 210b and the power supply 220, 230 is schematically shown by a phantom line (chain double-dashed line).

In FIG. 20, like the electrode terminal 204a, etc., the lead terminals 210a and 210b are not directly conducive to particulate matter detection. Thus, materials used to form the lead terminals 210a and 210b are suitably selected with consideration given to an environment where the sensor device is operated, the productivity of the sensor board 201, cost effectiveness, and other conditions. For example, the use of the lead terminals 210a and 210b formed of a highly oxidation-resistant metal material such as platinum or gold brings about an advantage in reliability to the sensor device 200. Moreover, in the capital interest of economy, etc., the lead terminals 210a and 210b may be formed of an iron-based alloy such as an iron-nickel-cobalt alloy, or may be constructed of a copper-made member, for example. Where the lead terminals 210a and 210b are formed of the iron-based alloy, their exposed surfaces may be protected by a plating layer such as a gold plating layer.

For example, the lead terminal 210a, 210b is joined to the electrode terminal 204a, etc. by a brazing material (not marked with reference symbol) such as silver solder (silver-copper solder) or gold solder. Like the materials used for the lead terminals 210a and 120b, a brazing material for use is suitably selected with consideration given to various conditions set for the manufacture or usage of the sensor board 201.

Although the sensing electrodes are formed from a 3 by 4 matrix of columnar electrodes (twelve electrodes in total) in the present example, the number of the sensing electrodes is not limited to this. For example, the sensing electrodes may be formed from an n by m matrix of electrodes (wherein n is greater than or equal to 2, and m is less than or equal to 200).

Moreover, the columnar sensing electrode of the above-described example is not limited to the cylindrical electrode, but may be given the form of an elliptical column or other polygonal column.

### (Eighth Example)

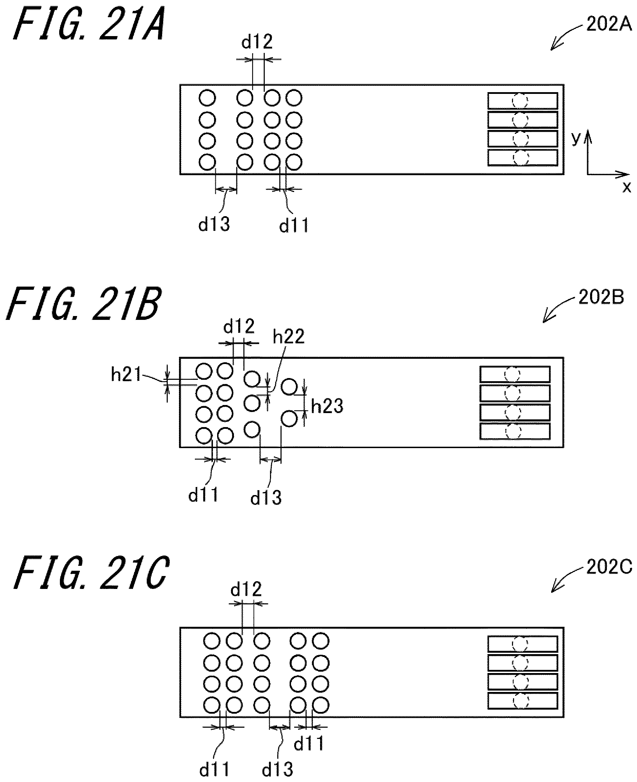

FIGS. 21A to 21C are each a top view of a sensor board implemented as a variation according to an eighth example, illustrating an arrangement of sensing electrodes. The following description of this example deals with arrangements of other sensing electrodes than those provided in the sensor board according to the seventh example (columnar sensing electrodes, in particular). Note that constituent components common to the implementation variations shown in FIGS. 21A to 21C and the preceding example shown in FIGS. 18A to 18E, 19A, and 19B will be identified with the same reference symbol, and overlapping descriptions will be omitted.

FIG. 21A is a top view of the sensor board implemented as a first variation according to this example. Like the sensor board 201 according to the seventh example, the sensor board 202A is also used in a sensor device designed for detection of particulate matter contained in exhaust gas, and its detection performance is equivalent to that of the sensor board 201. For purposes of convenience, as shown in FIG. 21A, there are provided x and y axes. Also in FIGS. 21B and 21C to be hereafter referred to, though not shown, there are provided x and y axes.

In the sensor board 202A, like the sensor board 201, there are successively disposed, in left-to-right order, an electrode group A, an electrode group B, an electrode group C, and an electrode group D. The electrode group A and the electrode group C are connected to a positive electrode of a power supply (not shown) whereas the electrode group B and the electrode group D are connected to a negative electrode of the power supply. Likewise, the sensor boards shown in FIGS. 21B and 21C, respectively, are each provided with an arrangement of electrode groups.

As a point of difference, in the sensor board 202A, a distance between the electrode group A and the electrode group B is set at d13 (equal to a value corresponding to 4d11), a distance between the electrode group B and the electrode group C is set at d12 (equal to a value corresponding to 2d11), and a distance between the electrode group C and the electrode group D is set at d11. That is, in contrast to the sensor board 201 in which the sensing electrode groups are disposed with a gradual increase in electrode distance, in the sensor board 202A, the sensing electrode groups are disposed with a gradual decrease in electrode distance.

For example, the sensor board 202A serves a useful function when exhaust gas flows opposite in direction to the travel of exhaust gas through the sensor board 201.

FIG. 21B is a top view of the sensor board implemented as a second variation according to this example. Like the sensor board 201, the sensor board 202B is also used in a sensor device designed for detection of particulate matter contained in exhaust gas, and performs detection as well as or better than the sensor board 201.

The sensor board 202B is identical with the sensor board 201 in electrode distance in the x direction. In addition to this feature, in the sensor board 202B, in the y direction, a distance h22 between adjacent sensing electrodes of the electrode group C is longer than a distance h21 between adjacent sensing electrodes of the electrode group B, and a distance h23 between adjacent sensing electrodes of the electrode group D is longer than the distance h22.

On account of being designed so that the sensing electrodes are disposed with various spacings both in the x direction and in the y direction, the sensor board 202B reduces uneven detection performance according to direction of travel of exhaust gas. Where the concentration of PM in exhaust gas is low, the sensor board 202B permits swift PM detection on the basis of accumulation of particulate matter between the closely spaced-apart sensing electrodes. On the other hand, where the concentration of PM in exhaust gas is high, much time is required for variation in electrical characteristics to occur due to accumulation of particulate matter between the widely spaced-apart sensing electrodes. This enables continuous detection for a longer period of time.

FIG. 21C is a top view of the sensor board implemented as a third variation according to this example. Like the sensor board 201, the sensor board 202C is also used in a sensor device designed for detection of particulate matter contained in exhaust gas, and performs detection as well as or better than the sensor board 201.

The sensor board 202C differs from the sensor board 201 in that an electrode group E is additionally disposed to the right of the electrode group D, and a distance between the electrode group D and the electrode group E in the x direction is set at d11 which is shorter than d13. That is, in the x direction, there are successively left, in left-to-right order, a shorter electrode distance, longer electrode distances, and a shorter electrode distance. The electrode group E is connected to the positive electrode of the power supply.

For example, the sensor board 202C serves a useful function when exhaust gas flows over a complex path as contrasted to the travel of exhaust gas through the sensor board 201. Alternatively, the sensing electrodes may be disposed so that, in the x direction, there are successively left, in left-to-right order, a longer electrode distance, shorter electrode distances, and a longer electrode distance.

On account of being basically identical in workings with the sensor device incorporating the sensor board 201, a sensor device equipped with each sensor board according to this example (not shown) can be implemented by the application of the sensor device 200 according to the seventh example. Thus, the description of operation of the sensor device will be omitted.

### (Ninth Example)

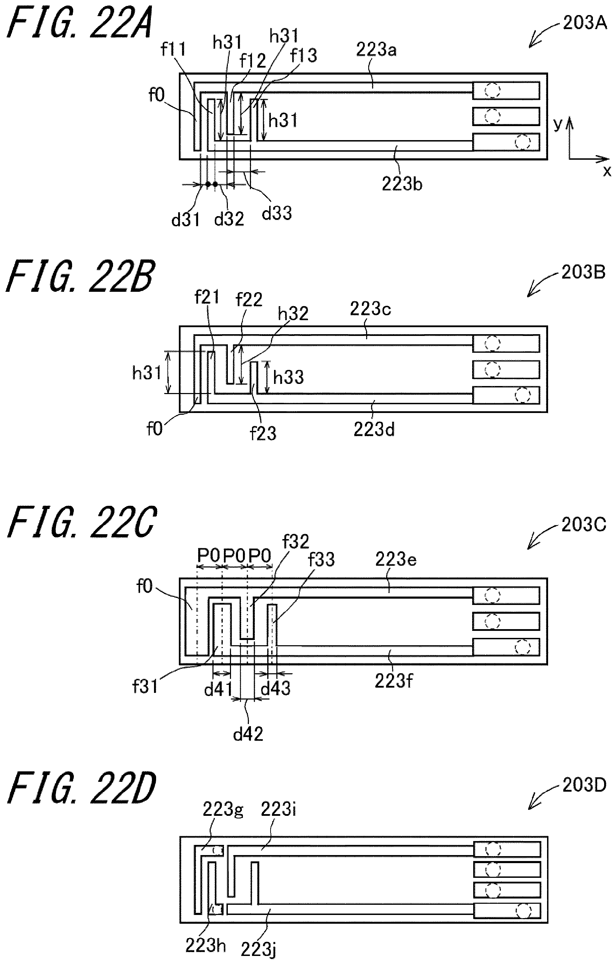

FIGS. 22A, 22B and 22D are each a top view of a sensor board implemented as a variation according to a ninth example, illustrating an arrangement of sensing electrodes. Fig. 22C is a top view showing a sensor board according to the present invention. The following description deals with arrangements of other sensing electrodes than those provided in the sensor board according to the seventh example (interdigitated comb-like electrodes, in particular). Note that constituent components common to the implementation variations shown in FIGS. 22A, 22B and 22D and the preceding example shown in FIGS. 18A to 18E, 19A, 19B, etc. will be identified with the same reference symbol, and overlapping descriptions will be omitted.

FIG. 22A is a top view of the sensor board implemented as a first variation according to this example. Also in FIG. 22A, for purposes of convenience, there are provided x and y axes. Likewise, in FIGS. 22B to 22D to be hereafter referred to, though not shown, there are provided x and y axes.

In a sensor board 203A implemented as the first variation, there is provided an arrangement of interdigitated comb-like electrodes that corresponds to the arrangement of the sensing electrodes 203a to 2031 of the seventh example. More specifically, the sensor board 203A has a sensing electrode 223a and a sensing electrode 223b which are connected to a positive electrode of a power supply (not shown), and a negative electrode of the power supply, respectively.

Moreover, the positive sensing electrode 223a includes electrode fingers f0 and f12 extending in a negative direction along the y axis, and the negative sensing electrode 223b includes electrode fingers f11 and f13 extending in a positive direction along the y axis, i.e. the y direction. While the electrode fingers f11, f12, and f13 have the same length set at h31 in the y direction, a distance d31 between the electrode fingers f0 and f11, a distance d32 between the electrode fingers f11 and f12, and a distance d33 between the electrode fingers f12 and f13 are determined so that the following relationship holds: d31 < d32 < d33. That is, the electrode fingers are disposed with a gradual increase in electrode finger-to-electrode finger distance.

FIG. 22B is a top view of the sensor board implemented as a second variation according to this example. In a sensor board 203B implemented as the second variation, there is provided an arrangement of interdigitated comb-like electrodes which corresponds to the arrangement of the sensing electrodes of the sensor board 202B according to the seventh example. More specifically, the sensor board 203B has a sensing electrode 223c and a sensing electrode 223d which are connected to a positive electrode of a power supply (not shown), and a negative electrode of the power supply, respectively. The electrode finger-to-electrode finger distances in the sensor board 203B are identical with those (d31, d32, and d33) in the sensor board 203A.

Moreover, the positive sensing electrode 223c includes electrode fingers f0 and f22 extending in a negative direction along the y axis, and the negative sensing electrode 223d includes electrode fingers f21 and f23 extending in a positive direction along the y axis, i.e. the y direction. The electrode fingers f21, f22, and f23 have different lengths set at h31, h32, and h33, respectively, in the y direction, and, a distance d31 between the electrode fingers f0 and f21, a distance d32 between the electrode fingers f1 and f22, and a distance d33 between the electrode fingers f22 and f23 are determined so that the following relationship holds: d31 < d32 < d33. That is, the electrode fingers are disposed with a gradual increase in electrode finger-to-electrode finger distance both in the x direction and in the y direction.

Like the sensor board 202B according to the seventh example, the sensor board 203B is designed so that the electrode fingers are disposed with various spacings both in the x direction and in the y direction. Thus, where the concentration of PM in exhaust gas is low, the sensor board 203B permits swift PM detection on the basis of accumulation of particulate matter between the closely spaced-apart sensing electrodes. On the other hand, where the concentration of PM in exhaust gas is high, much time is required for variation in electrical characteristics to occur due to accumulation of particulate matter between the widely spaced-apart sensing electrodes. This enables continuous detection for a longer period of time.

FIG. 22C is a top view of the sensor board according to the present invention. A sensor board 203C according to the present invention differs from the sensor board 201 in that there are provided interdigitated comb-like electrodes 223e and 223f designed so that, with a center-to-center spacing, defined as an electrode pitch distance, between electrode fingers f0 and f31, an electrode pitch distance between electrode fingers f31 and f32, and an electrode pitch distance between electrode fingers f32 and f33 set at the same value (P0), the electrode fingers f31, f32, and f33 are given different electrode widths, namely d41, d42, and d43, respectively, that is; the electrode fingers are disposed in decreasing order of electrode width in plan configuration to achieve a gradual increase in electrode finger-to-electrode finger distance. Instead of the interdigitated comb-like electrodes described just above, the earlier described columnar electrodes (for example, cylindrical electrodes) may be adopted for use. In this case, the columnar electrodes are also placed with a uniform electrode pitch distance, and yet disposed in decreasing order of e.g. electrode diameter corresponding to the electrode width in plan configuration to achieve a gradual increase in electrode distance.

On account of being designed so that the electrode fingers of the interdigitated comb-like electrodes are placed with a uniform electrode pitch distance and yet disposed in decreasing order of electrode width to achieve a gradual increase in sensing electrode-to-sensing electrode distance in the x direction, the sensor board 203C reduces uneven detection performance according to direction of travel of exhaust gas. Where the concentration of PM in exhaust gas is low, the sensor board 203C permits swift PM detection on the basis of accumulation of particulate matter between the closely spaced-apart sensing electrodes. On the other hand, where the concentration of PM in exhaust gas is high, much time is required for variation in electrical characteristics to occur due to accumulation of particulate matter between the widely spaced-apart sensing electrodes. This enables continuous detection for a longer period of time.

For example, the sensor board 203C is advantageous for an electrode pitch-unadjustable sensor board manufacturing process.

FIG. 22D is a top view of the sensor board implemented as a third variation according to the ninth example. A sensor board 203D implemented as the third variation differs from the sensor board 203A in that there are provided two separate groups of interdigitated comb-like electrodes for elaborate detection of particulate matter. More specifically, comb-like electrodes fall into two groups, namely a group of interdigitated comb-like electrodes 223g and 223h disposed with a shorter electrode finger-to-electrode finger distance, and a group of interdigitated comb-like electrodes 223i and 223j disposed with a longer electrode finger-to-electrode finger distance. This makes it possible to detect particulate matter existing between the closely spaced-apart electrode fingers and particulate matter existing between the widely spaced-apart electrode fingers on an individual basis, and thereby effect detection of particulate matter elaborately. Although the comb-like electrodes fall into two groups in the fourth example, the number of groups is not limited to this. Three or more separate groups of interdigitated comb-like electrodes may be provided instead for particulate matter detection.

On account of being basically identical in workings with the sensor device incorporating the sensor board 1, a sensor device equipped with each sensor board according to this example (not shown) can be implemented by the application of the sensor device 10 according to the first example. Thus, the description of operation of the sensor device will be omitted. It is also possible to provide a sensor board, etc. constructed of electrodes obtained by the combined use of the above-described examples or implementation examples.

### (Tenth Example)

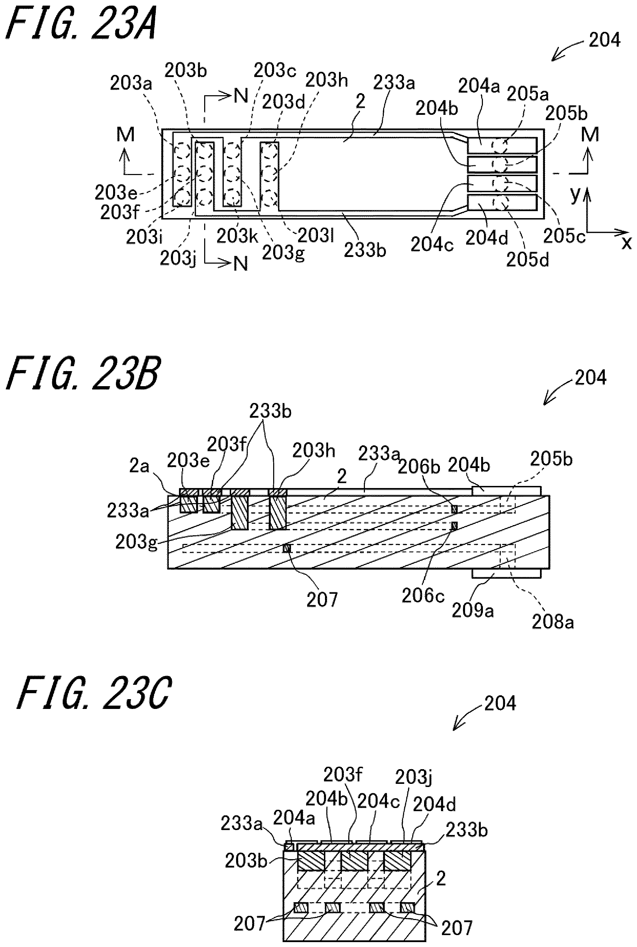

FIGS. 23A to 23C are drawings showing a structural example of a sensor board according to a tenth example. A sensor board 204 according to this example is constructed by providing additional interdigitated comb-like electrodes 233a and 233b in the sensor board 201 according to the seventh example. The comb-like electrode 233a is connected corresponding to columnar electrodes 203a, 203e, 203i, 203c, 203g, and 203k below, and the comb-like electrode 233b is connected corresponding to columnar electrodes 203b, 203f, 203j, 203d, 203h, and 2031 below. The columnar electrodes 203a to 2031 can be implemented by the application of the columnar electrodes 203a to 2031 of the seventh
example.

FIG. 23A is a top view of the sensor board 204 according to this example. FIG. 23B is a sectional view taken along the line M-M of FIG. 23A, and FIG. 23C is a sectional view taken along the line N-N of FIG. 23A. The sensor board 204 according to this example comprising the interdigitated comb-like electrodes 233a and 233b and the columnar electrodes 203a to 2031 can be produced by a conventional manufacturing method. The second to fifth layers of the sensor board according to this example are similar in configuration to those of the sensor board 201 according to the seventh example and thus the description of them will be omitted. Moreover, constituent components common to the example shown in FIGS. 23A to 23C and the preceding example shown in FIGS. 18A, 19A, and 19B will be identified with the same reference symbol, and overlapping descriptions will be omitted.

As shown in FIG. 23A, the first layer of the sensor board 204 has the interdigitated comb-like electrodes 233a and 233b, of which the comb-like electrode 233a is joined corresponding to the columnar electrodes 203a, 203e, 203i, 203c, 203g, and 203k below, and similarly the comb-like electrode 233b is joined corresponding to the columnar electrodes 203b, 203f, 203j, 203d, 203h, and 2031 below.

In the sensor board 204 thereby constructed, the interdigitated comb-like electrodes 233a and 233b are each securely held by six columnar electrodes. This arrangement can suppress separation of the interdigitated comb-like electrodes 233a and 233b.

A sensor device according to this example, not shown, can be implemented by the application of the sensor device 200 according to the seventh example, and the description of operation of the sensor device will thus be omitted.

### Reference Signs List

1, 11, 101a, 101b, 101c: Sensor board
201, 202A, 202B, 202C: Sensor board
203A, 203B, 203C: Sensor board
2, 12, 102, 202: Insulating substrate
2a, 12a: First face
2a: One surface (first face)
2b: Other surface(second face)
3a, 3b, 3c, 3d: Sensing electrode
13a, 13b, 13c, 13d: Sensing electrode
103a, 103b, 103c, 103d: Sensing electrode
103e, 103f, 103g, 103h: Sensing electrode
113a, 113b, 113c, 113d, 113e: Sensing electrode
113f, 113g, 113h, 113i: Sensing electrode
113j, 113k, 113l, 113m, 113n: Sensing electrode
1130, 113p, 113q, 113r: Sensing electrode
123a, 123b, 123c, 123d: Sensing electrode (comb-like electrode)
133a, 133b, 133c, 133d, 133e: Columnar electrode
134a, 134b, 134c, 134d: Columnar electrode
135a, 135b, 135c, 135d: Columnar electrode
136a, 136b, 136c, 136d, 136e: Columnar electrode
203a, 203b, 203c, 203d: Sensing electrode (columnar electrode)
203e, 203f, 203g, 203h: Sensing electrode (columnar electrode)
203i, 203j, 203k, 203l: Sensing electrode (columnar electrode)
223a, 223b, 223c, 223d, 223e: Sensing electrode (comb-like electrode)
223f, 223g, 223h, 223i, 223j: Sensing electrode (comb-like electrode)
4a, 4b, 4c, 4d: Electrode terminal
14a, 14b, 14c, 14d: Electrode terminal
104a, 104b, 104c, 104d: Electrode terminal
104e, 104f, 104g: Electrode terminal
114a, 114b, 114c: Electrode terminal
124a, 124b, 124c: Electrode terminal
204a, 204b, 204c, 204d: Electrode terminal
5a, 5b, 5c, 5d: Internal wiring line
15a, 15c, 18a, 18b: Internal wiring line
105a, 105b, 105c: Internal wiring line
8a, 8b, 105e, 105f, 105g, 108a: Internal wiring line
115a, 115b, 118a: Internal wiring line
125a, 125b, 125e, 125f: Internal wiring line
205a, 205b, 205c, 205d: Internal wiring line
208a, 208b: Internal wiring line
6a, 6b, 6c, 6b, 16a, 16c: Innerlayer wiring line
106a, 106b, 106c, 106d: Innerlayer wiring line
106e, 106f, 106g, 106h: Innerlayer wiring line
116a, 116b, 116c: Innerlayer wiring line
116j, 116k, 116l: Innerlayer wiring line
206a, 206b, 206c, 206d: Innerlayer wiring line
7, 17, 107, 117, 127a, 127b, 207: Heat-generating electrode
10, 100, 200: Sensor device
20: Overall control section
31: First soot detecting section
32: Second soot detecting section
33: Third soot detecting section
34: Fourth soot detecting section
35: Fifth soot detecting section
36: Sixth soot detecting section
40: Heater control section
50: Temperature detecting section
60: Display section
109, 129: Sensing region
120, 130, 220, 230: Power supply
140, 240: Measurement detection circuit

## Claims

1. A sensor board (203C), comprising:
an insulating substrate;
a pair of a positive sensing electrode and a negative sensing electrode which is located in the insulating substrate, the pair of sensing electrodes including at least a pair of a positive columnar electrode and a negative columnar electrode, each of the pair of columnar electrodes comprising a part exposed at a first face of the insulating substrate; and
innerlayer wiring lines that are embedded within the insulating substrate and correspond to each of the pair of sensing electrodes, respectively, wherein
the positive sensing electrode (223e) includes a first positive electrode (f0) and a second positive electrode (f32) which are located at a surface of the insulating substrate, and
the negative sensing electrode (223f) includes a first negative electrode (f31) disposed adjacent to the first positive electrode (f0) in one direction (x) and a second negative electrode (f33) disposed adjacent to the second positive electrode (f32) in the one direction (x), wherein
the first positive electrode (f0), the first negative electrode (f31), the second positive electrode (f32), and the second negative electrode (f33) are juxtaposed in the one direction (x) in such a manner that a first electrode pitch which is a center-to-center spacing between the first positive electrode (f0) and the second positive electrode (f32), is equal to a second electrode pitch which is a center-to-center spacing between the first negative electrode (f31) and the second negative electrode (f33), and
an electrode width of the first positive electrode (f0) and an electrode width (d41) of the first negative electrode (f31) are different from each other, or an electrode width of the first positive electrode (f0) and an electrode width (d42) of the second positive electrode (f32) are different from each other.

2. A sensor device, comprising:
the sensor board (203C) according to claim 1; and
a power supply which supplies electric power to the pair of positive and negative sensing electrodes (223e, 223f) via the innerlayer wiring lines.

## Patentansprüche

1. Eine Sensorplatte (203C), aufweisend:
ein Isoliersubstrat,
ein Paar aus einer positiven Erfassungselektrode und einer negativen Erfassungselektrode, das im Isoliersubstrat angeordnet ist, wobei das Paar von Erfassungselektroden mindestens ein Paar aus einer positiven säulenförmigen Elektrode und einer negativen säulenförmigen Elektrode aufweist, wobei jede aus dem Paar von säulenförmigen Elektroden einen Teil aufweist, der an einer ersten Fläche des Isoliersubstrats freiliegt, und
Innenschicht-Verdrahtungsleitungen, die in dem Isoliersubstrat eingebettet sind und einer jeweiligen aus dem Paar von Erfassungselektroden entsprechen, wobei
die positive Erfassungselektrode (223e) eine erste positive Elektrode (f0) und eine zweite positive Elektrode (f32) aufweist, die an einer Fläche des Isoliersubstrats angeordnet sind, und
die negative Erfassungselektrode (223f) eine erste negative Elektrode (f31), die benachbart zu der ersten positiven Elektrode (f0) in einer Richtung (x) angeordnet ist, und eine zweite negative Elektrode (f33), die benachbart zu der zweiten positiven Elektrode (f32) in der einen Richtung (x) angeordnet ist, aufweist, wobei
die erste positive Elektrode (f0), die erste negative Elektrode (f31), die zweite positive Elektrode (f32) und die zweite negative Elektrode (f33) in der einen Richtung (x) auf derartige Weise nebeneinander angeordnet sind, dass ein erster Elektrodenabstand, der ein Mitte-zu-Mitte-Abstand zwischen der ersten positiven Elektrode (f0) und der zweiten positiven Elektrode (f32) ist, gleich einem zweiten Elektrodenabstand ist, der ein Mitte-zu-Mitte-Abstand zwischen der ersten negativen Elektrode (f31) und der zweiten negativen Elektrode (f33) ist, und
eine Elektrodenbreite der ersten positiven Elektrode (f0) und eine Elektrodenbreite (d41) der ersten negativen Elektrode (f31) voneinander verschieden sind, oder eine Elektrodenbreite der ersten positiven Elektrode (f0) und eine Elektrodenbreite (d42) der zweiten positiven Elektrode (f32) voneinander verschieden sind.

2. Eine Sensorvorrichtung, aufweisend:
die Sensorplatte (203C) gemäß Anspruch 1 und
eine Stromversorgung, die dem Paar aus positiver und negativer Erfassungselektrode (223e, 223f) über die Innenschicht-Verdrahtungsleitungen elektrischen Strom zuführt.

## Revendications

1. Une carte de capteur (203C), comprenant :
un substrat isolant ;
une paire d'une électrode de détection positive et d'une électrode de détection négative qui est située dans le substrat isolant, la paire d'électrodes de détection comprenant au moins une paire d'une électrode colonnaire positive et d'une électrode colonnaire négative, chacune de la paire d'électrodes colonnaires comprenant une partie exposée à une première face du substrat isolant ; et
des lignes de câblage de couche interne qui sont noyées dans le substrat isolant et qui correspondent à chacune de la paire d'électrodes de détection, respectivement, où
l'électrode de détection positive (223e) comprend une première électrode positive (f0) et une deuxième électrode positive (f32) qui sont situées sur une surface du substrat isolant, et
l'électrode de détection négative (223f) comprend une première électrode négative (f31) disposée de manière adjacente à la première électrode positive (f0) dans une direction (x) et une deuxième électrode négative (f33) disposée de manière adjacente à la deuxième électrode positive (f32) dans ladite une direction (x), où
la première électrode positive (f0), la première électrode négative (f31), la deuxième électrode positive (f32) et la deuxième électrode négative (f33) sont juxtaposées dans ladite une direction (x) de telle manière qu'un premier pas d'électrode qui est un espacement centre à centre entre la première électrode positive (f0) et la deuxième électrode positive (f32) est égal à un deuxième pas d'électrode qui est un espacement centre à centre entre la première électrode négative (f31) et la deuxième électrode négative (f33), et
une largeur d'électrode de la première électrode positive (f0) et une largeur d'électrode (d41) de la première électrode négative (f31) sont différentes l'une de l'autre, ou une largeur d'électrode de la première électrode positive (f0) et une largeur d'électrode (d42) de la deuxième électrode positive (f32) sont différentes l'une de l'autre.

2. Un dispositif de capteur, comprenant :
la carte de capteur (203C) selon la revendication 1 ; et
une alimentation électrique qui fournit de l'énergie électrique à la paire d'électrodes de détection positive et négative (223e, 223f) via les lignes de câblage de couche interne.
